# EUROPÄISCHE PATENTSCHRIFT

(11) **EP 4 095 165 B1**
(45) Veröffentlichungstag und Bekanntmachung des Hinweises auf die Patenterteilung: **15.11.2023**
(21) Anmeldenummer: 22174789.2
(22) Anmeldetag: 23.05.2022
(51) Int. Cl.: C08C 19/06, C08C 19/40, C08G 59/02, C08G 59/14, C08G 59/16, C08G 59/34, C08G 63/08, C08G 65/26

(54) **POLYESTER-POLYETHERMODIFIZIERTE POLYBUTADIENE UND VERFAHREN ZU DEREN HERSTELLUNG**
POLYESTER-POLYETHER-MODIFIED POLYBUTADIENE AND METHOD FOR PRODUCING THE SAME
POLYBUTADIÈNES MODIFIÉS PAR POLYESTER-POLYÉTHER ET LEUR PROCÉDÉ DE PRODUCTION

(30) Priorität: 27.05.2021 EP 21176161
(43) Veröffentlichungstag der Anmeldung: 30.11.2022
(73) Patentinhaber: Evonik Operations GmbH, 45128 Essen (DE)
(72) Erfinder: Blüm, Jana, 45128 Essen (DE); Fiedel, Michael, 45239 Essen (DE); Halbhuber, Annett, 47799 Krefeld (DE); Redeker, Stefanie, 45527 Hattingen (DE); Schubert, Frank, 47506 Neukirchen-Vluyn (DE); Otto, Sarah, 45138 Essen (DE)
(74) Vertreter: Evonik Patent Association

(56) Entgegenhaltungen:
- QING GAO ET AL: "Facile Synthesis of Amphiphilic Heterografted Copolymers with Crystalline and Amorphous Side Chains", MACROMOLECULAR CHEMISTRY AND PHYSICS,, Bd. 214, Nr. 15, 1. Januar 2013 (2013-01-01), Seiten 1677-1687, XP002799119, DOI: 10.1002/MACP.201300255

## Beschreibung

Die vorliegende Erfindung betrifft kammständig (seitständig) mit Polyester-Polyethermodifizierte Polybutadiene und deren Herstellungsverfahren sowie deren Verwendung.

Polybutadiene mit seitständigen Polyetherresten sind bekannt und werden nach dem Stand der Technik beispielsweise durch eine Umsetzung von reaktiven, funktionalisierten Polybutadienen mit Polyethern hergestellt. So beschreiben Q. Gao et. al. in Macromolecular Chemistry and Physics (2013), 214(15), 1677-1687 amphiphile Polymer-Kammstrukturen, die durch Graften (Pfropfen) von Polyethylenglycol an eine Polybutadien-Hauptkette hergestellt werden. Gemäß JP 2011038003 werden mit Maleinsäureanhydrid-Einheiten funktionalisierte Polybutadiene mit Amino-terminierten Polyethern umgesetzt. Es entstehen maleinisierte Polybutadiene mit kammständigen Polyetherresten, welche über eine Amid- oder Imid-Gruppe angebunden sind. In einem ähnlichen Verfahren werden gemäß J. Wang, Journal of Applied Polymer Science (2013), 128(4), 2408-2413 Polyethylenglycole unter Ausbildung einer Ester-Verknüpfung an Polybutadiene mit hohem Anteil an 1,2-Butadien-Monomereinheiten addiert. Hochmolekulare Graftpolymere mit Kammstruktur werden nach dem in JP 2002105209 offenbarten Verfahren durch eine Addition von epoxidierten Polybutadienen mit OH-funktionellen Polyethern erhalten. H. Decher et. al. nutzen gemäß Polymer International (1995), 38(3), 219-225 die Addition von Isocyanat-terminierten Polyethylenglycolen an hydroxyfunktionelle Polybutadiene. Weiterhin sind Verfahren zur Herstellung von polyethermodifizierten Polybutadienen bekannt, bei denen hydroxyfunktionelle Polybutadiene mit Epoxidverbindungen umgesetzt werden. So ist aus dem Stand der Technik beispielsweise die Alkoxylierung von OH-terminierten Polybutadienen bekannt. US 4994621 A beschreibt beispielsweise die Alkoxylierung von hydroxylterminierten Polybutadienen mit Ethylenoxid und Propylenoxid in Gegenwart von Tetramethylammoniumhydroxid. EP 2003156 A1 führt aus, dass die alkalisch katalysierte Alkoxylierung von OH-terminierten Polybutadienen strukturell bedingt und durch die schlechte Löslichkeit alkalischer Katalysatoren kaum möglich ist und bevorzugt stattdessen die Doppelmetallcyanid (DMC)-Katalyse. Die Verwendung OH-terminierter Polybutadiene in der Alkoxylierung führt ausschließlich zu Polyether-Polybutadien-Polyether-Triblockstrukturen. Dieser Blockaufbau ist laut EP 2003156 A1 verantwortlich für die schlechte Mischbarkeit mit anderen Reaktionskomponenten bei der Herstellung von Polyurethanen.

Neben der Alkoxylierung von OH-terminierten Polybutadienen ist auch die Alkoxylierung von seitständig hydroxyfunktionellen Polybutadienen bekannt. So beschreiben Q. Gao et. al. in Macromolecular Chemistry and Physics (2013), 214(15), 1677-1687 die Herstellung eines seitständig polyethermodifizierten Polybutadiens durch Alkoxylierung eines seitständig hydroxyfunktionellen Polybutadiens mit Ethylenoxid. Die Herstellung des dabei eingesetzten seitständig hydroxyfunktionellen Polybutadiens erfolgt zunächst durch Epoxidierung eines Polybutadiens, anschließender Umsetzung des epoxidierten Polybutadiens mit einer Lithium-Polybutadien-Verbindung und schließlich Protonierung des Reaktionsprodukts mit HCl-saurem Methanol. Dieses Verfahren führt zu einem Polybutadien mit sowohl seitständigen Polyetherresten als auch seitständigen Polybutadienresten. Da hier je einem Polyetherrest immer auch ein Polybutadienrest gegenübersteht, führt dieses Verfahren zu polyethermodifizierten Polybutadienen mit niedrigen HLB-Werten (HLB - hydrophilic lipophilic balance). Zudem sind die polyethermodifizierten Polybutadiene im Polybutadienteil verzweigt. Polyethermodifizierte Polybutadiene mit höheren HLB-Werten und/oder unverzweigtem Polybutadienteil sind durch dieses Verfahren nicht herstellbar. Ein weiterer Nachteil des Verfahrens ist die Verwendung von metallorganischen Verbindungen (n-BuLi und Lithium-Polybutadien), die aufgrund ihrer hohen Luft- und Feuchtigkeitsempfindlichkeit besondere Anforderungen an die Prozessführung stellt. Dies erschwert die industrielle Umsetzung dieses Verfahrens. Aus dem Stand der Technik ist bislang kein Verfahren zur Herstellung von vorzugsweise linearen Polybutadienen mit seitständigen Polyetherketten durch eine einfache, direkte Alkoxylierungsreaktion von seitständig hydroxyfunktionellen Polybutadienen mit Alkylenoxiden, wobei die seitständig hydroxyfunktionellen Polybutadiene aus epoxyfunktionellen Polybutadienen ohne Verwendung von metallorganischen Verbindungen, wie Lithium-Polybutadien, hergestellt werden, bekannt. Zusammenfassend bleibt festzuhalten, dass aus dem Stand der Technik bislang kein Verfahren zur Herstellung von linearen Polybutadienen mit kammständigen Polyetherketten durch eine einfache, direkte Alkoxylierungsreaktion mit Alkylenoxiden bekannt ist.

Die chemische Modifizierung von Polybutadien mit Hilfe der Epoxidierung und Folgereaktionen ist aus der Literatur bekannt. Die Epoxidringöffnung findet meist durch eine Reaktion mit Aminen statt. JP 53117030 und DE 2943879 beschreiben die Addition von Ethanolamin bzw. Diethanolamin, EP 351135 und DE 3305964 die Umsetzung der Epoxidgruppen mit Dimethylamin. DD 206286 offenbart die Addition von primären und sekundären Aminen mit 4 bis 20 C-Atomen an epoxidierte Polybutadiene in polaren Lösemitteln. Darüber hinaus ist die Modifizierung von Polybutadien mit Fettsäuren bekannt. So beschreibt die DE 3442200 die Addition von C₆-C₂₂ Carbonsäuren an epoxidiertes Polybutadien. Eine weitere Alkoxylierung der Reaktionsprodukte wird in diesen Schriften nicht offenbart. Amin-funktionelle Polybutadiene sind im Sinne der vorliegenden Erfindung als Startverbindungen für die Alkoxylierung wenig geeignet, da sie den Produkten einen oft unerwünschten basischen Charakter verleihen, Anlass zu Verfärbungen geben oder z.B. Alkoxylierungskatalysatoren wie Doppelmetallcyanide inhibieren.

Die Addition von Alkoholen und Wasser an epoxidiertes Polybutadien scheint laut Stand der Technik ungleich schwieriger als die Addition von Aminen und Carbonsäuren zu sein. Qing Gao et. al. beschreiben in J. Macromol. Sci., Part A: Pure and Applied Chemistry (2013), 50, 297-301 die Trifluormethansulfonsäure-katalysierte Addition von Wasser an epoxidierte Polybutadiene in THF. Die WO 2016/142249 A1 zielt auf die Herstellung glasartiger Polymere durch Addition von Wasser oder Alkoholen mit 1 bis 4 C-Atomen an die Epoxidgruppen von Polybutadien ab und beschränkt sich auf die Herstellung von OH-funktionellen Polybutadienen mit niedrigen Molmassen von 300 bis 2000 g/mol und einem hohem Gehalt von 50 % bis 80 % an 1,2-vinylischen und 1,2-cyclovinylischen Doppelbindungen.

Polybutadiene und modifizierte Polybutadiene werden vielfach als Reaktivkomponente oder Formulierungsbestandteil eingesetzt, um z.B. Polymere hydrophob auszustatten oder zu flexibilisieren und die mechanischen Eigenschaften zu verbessern. Den Einsatzmöglichkeiten alkoxylierter Polyethermodifizierter Polybutadiene sind derzeit jedoch durch die Beschränkung auf wenige verfügbare Triblockstrukturen häufig Grenzen gesetzt. Es fehlt bisher die Möglichkeit, den chemischen Aufbau der polyethermodifizierten Polybutadiene in weiten Grenzen zu variieren. Zudem gibt es kein einfaches Herstellverfahren für solche Polymere.

Die bisher unveröffentlichten europäischen Patentanmeldung EP 19212066.5 bzw. PCT/EP2020/083013 widmet sich der Herstellung von polyethermodifizierten Polybutadienen sowie gemäß diesem Verfahren herstellbare polyethermodifizierte Polybutadiene, wobei das Verfahren folgende Schritte umfasst:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G).

Die erfindungsgemäßen polyethermodifizierten Polybutadiene sind also durch eine direkte Alkoxylierung seitständig hydroxyfunktioneller Polybutadiene erhältlich und weisen seitständige (kammständige) Polyetherreste auf.

Es hat sich herausgestellt, dass die nach dieser Lehre hergestellten seitständigen (kammständigen) polyethermodifizierte Polybutadiene sich hervorragend als Entschäumer und/oder Haftvermittler für Lacke und Farben eignen.

Es stellt sich daher die Frage, ob es möglich ist, das besagte polyethermodifizierte Polybutadien zu optimieren, um deren Verwendung im Farb- und Lackbereich zu verbessern.

Basierend auf die Lehre der Europäischen Patentanmeldung EP 19212066.5 bzw. PCT/EP2020/083013 schlägt die vorliegende Erfindung eine Verbindung auf Basis von polyethermodifiziertem Polybutadien, wobei das polyethermodifizierte Polybutadien Wiederholungseinheiten ausgewählt aus der Gruppe bestehend aus den zweibindigen Resten 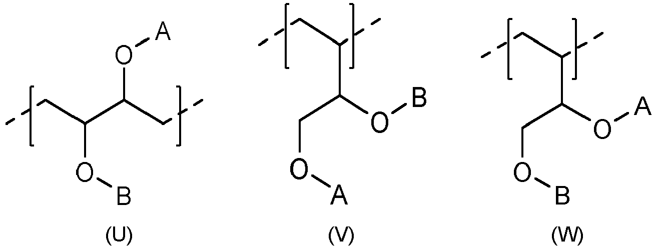 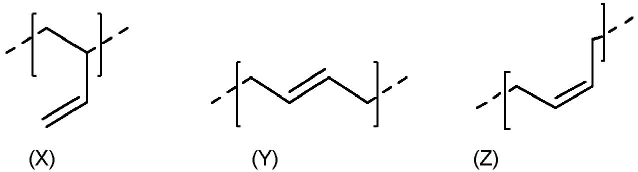 umfasst;
wobei
A jeweils unabhängig voneinander ein einbindiger organischer Rest oder ein Wasserstoffrest ist,
   bevorzugt jeweils unabhängig voneinander ausgewählt ist aus der Gruppe bestehend aus einbindigen Kohlenwasserstoffresten mit 1 bis 6 Kohlenstoffatomen,
   besonders bevorzugt jeweils unabhängig voneinander ausgewählt ist aus der Gruppe bestehend aus Alkylresten mit 1 bis 4 Kohlenstoffatomen;
B jeweils unabhängig voneinander ausgewählt ist aus der Gruppe bestehend aus Resten der Formel (4a), 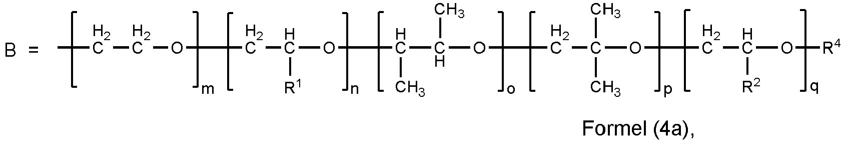 bevorzugt jeweils unabhängig voneinander ausgewählt ist aus der Gruppe bestehend aus Resten der Formel (4b), 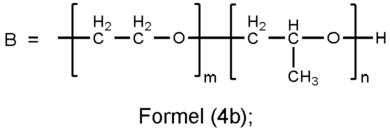
   - R¹: jeweils unabhängig voneinander ausgewählt ist aus der Gruppe bestehend aus einbindigen Kohlenwasserstoffresten mit 1 bis 16 Kohlenstoffatomen,
   bevorzugt jeweils unabhängig voneinander ein Alkylrest mit 1 bis 16 Kohlenstoffatomen oder ein Phenylrest ist,
   besonders bevorzugt jeweils unabhängig voneinander ein Methylrest, ein Ethylrest oder ein Phenylrest ist;
   - R²: ein Rest der Formel -CH₂-O-R³ ist;
   - R³: jeweils unabhängig voneinander ausgewählt ist aus der Gruppe bestehend aus einbindigen Kohlenwasserstoffresten mit 3 bis 18 Kohlenstoffatomen;
   bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
   besonders bevorzugt ein tert-Butylphenylrest oder ein o-Kresylrest ist;
   - R⁴: Wasserstoff
   und
   m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
   und jede Permutation der Wiederholungseinheiten (U), (V), (W), (X), (Y) und (Z) sowie der Wiederholungseinheiten im Rest B mitumfasst ist, mit der Maßgabe, dass die Summe aller Wiederholungseinheiten (U), (V) und (W) dividiert durch die Summe aller Wiederholungseinheiten (U), (V), (W), (X), (Y) und (Z) von >0 % ist, vor, wobei
   der Rest B mindestens eine Estergruppe aufweist.

Überraschenderweise wurde festgestellt, dass die Performance der erfindungsgemäßen veresterten polyethermodifizierten Polybutadiene beispielweise als Haftmittler noch gesteigert werden konnte. Vorzugsweise wird die Estergruppe durch Umsetzung der Reste B mit Verbindungen ausgewählt aus der Gruppe bestehend aus cyclischen Anhydriden, Di-Lactiden, Lactonen oder cyclischen Carbonaten als Monomere oder Comonomere gebildet.

Vorzugsweise umfasst die Verbindung nach der Umsetzung Wiederholungseinheiten ausgewählt aus der Gruppe bestehend aus den Resten

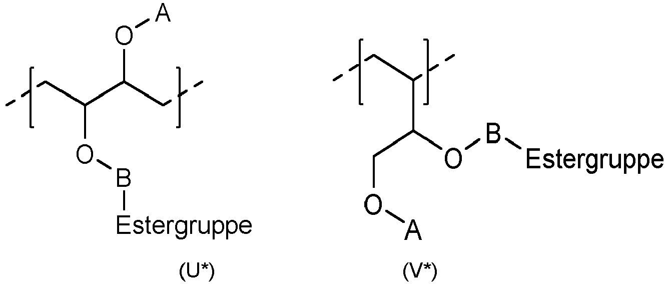

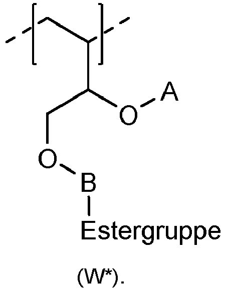

Bevorzugt sind die cyclischen Anhydride, rein oder in beliebigen Mischungen, ausgewählt aus der Gruppe bestehend aus gesättigten, ungesättigten oder aromatischen cyclischen Dicarbonsäureanhydriden, bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid.

Bevorzugt sind die Lactone, rein oder in beliebigen Mischungen, ausgewählt aus der Gruppe bestehend aus Valerolactone, Caprolactone und Butyrolactone, die unsubstituiert oder mit Alkylgruppen, bevorzugt Methylgruppen, substituiert sein können, vorzugsweise ε-Caprolacton oder δ-Valerolacton.

Erfindungsgemäße Verbindung und polyester-polyethermodifizierte Polybutadien werden hierin als Synonyme verstanden.

Vorzugsweise ist das polyester-polyethermodifizierte Polybutadien ein lineares Polybutadien, das kammständig (seitständig) mit Polyetherresten modifiziert ist, welche mit mindestens einer Estergruppe modifiziert sind. Es ist also bevorzugt, dass das polyester-polyethermodifizierte Polybutadien ein lineares Polybutadien-Rückgrat und seitständige Polyetherreste aufweist, die mindestens eine Estergruppe aufweisen.

Die Reste R¹, R² und R³ können dabei jeweils unabhängig voneinander linear oder verzweigt, gesättigt oder ungesättigt, aliphatisch oder aromatisch, substituiert oder unsubstituiert sein.

Die allgemeine Schreibweise 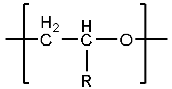 mit R = R¹ oder R² in Formel (4a) bzw. R = CH₃ in den Formeln (4b) und steht dabei sowohl für eine Einheit der Formel 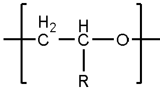 als auch eine für eine Einheit der Formel 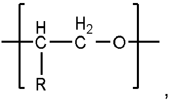 vorzugweise aber für eine Einheit der Formel 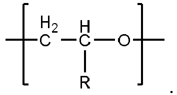 Die allgemeine Schreibweise 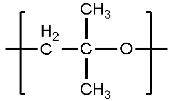 in Formel (4a) steht dabei sowohl für eine Einheit der Formel 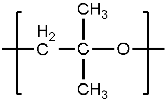 als auch eine für eine Einheit der Formel 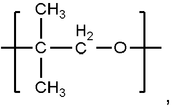 vorzugweise aber für eine Einheit der Formel

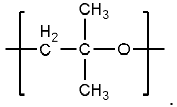

Es ist weiterhin bevorzugt, dass der Rest R⁴ ein Wasserstoff ist.

Es ist dabei bevorzugt, dass die Summe aller Wiederholungseinheiten (U), (V) und (W) dividiert durch die Summe aller Wiederholungseinheiten (U), (V), (W), (X), (Y) und (Z) des mindestens einen polyester-polyethermodifizierten Polybutadiens (G) von >0 % bis 70 %, bevorzugt von 1 % bis 50 %, weiter bevorzugt von 2 % bis 40 %, noch weiter bevorzugt von 3 % bis 30 %, besonders bevorzugt von 4 % bis 20 % beträgt.

Das bedeutet, dass >0 % bis 70 %, bevorzugt 1 % bis 50 %, weiter bevorzugt von 2 % bis 40 %, noch weiter bevorzugt von 3 % bis 30 %, besonders bevorzugt von 4 % bis 20 % der Gesamtheit der Wiederholungseinheiten (U), (V), (W), (X), (Y) und (Z) polyester-polyethermodifizierte sind.

Die zahlenmittlere Molmasse Mₙ, gewichtsmittlere Molmasse M_{w} und Polydispersität des Polybutadienteils des polyester-polyethermodifizierten Polybutadiens sind beliebig. Unter dem Polybutadienteil wird dabei der Teil des polyester-polyethermodifizierten Polybutadiens verstanden, der vom verfahrensgemäß eingesetzten Polybutadien stammt.

Es ist bevorzugt, dass die zahlenmittlere Molmasse Mₙ des Polybutadienteils des polyester-polyethermodifizierten Polybutadien von 200 g/mol bis 20000 g/mol, bevorzugt von 500 g/mol bis 10000 g/mol, besonders bevorzugt von 700 g/mol bis 5000 g/mol beträgt.

Alternativ ist es bevorzugt, dass die zahlenmittlere Molmasse Mₙ des Polybutadienteils des polyester-polyethermodifizierten Polybutadiens von 2100 g/mol bis 20000 g/mol, besonders bevorzugt von 2200 g/mol bis 10000 g/mol, ganz besonders bevorzugt von 2300 g/mol bis 5000 g/mol beträgt.

Die zahlenmittlere Molmasse Mₙ des Polybutadienteils ist dabei als die zahlenmittlere Molmasse Mₙ des zugrundeliegenden Polybutadiens definiert.

Es ist weiterhin bevorzugt, dass das polyester-polyethermodifizierte Polybutadien im Zahlenmittel 5 bis 360, besonders bevorzugt 10 bis 180, ganz besonders bevorzugt 15 bis 90 Wiederholungseinheiten aufweist, wobei die Wiederholungseinheiten aus der Gruppe bestehend aus (U), (V), (W), (X), (Y) und (Z) ausgewählt sind.

Alternativ ist es bevorzugt, dass das polyester-polyethermodifizierte Polybutadien im Zahlenmittel 35 bis 360, besonders bevorzugt 40 bis 180, ganz besonders bevorzugt 45 bis 90 Wiederholungseinheiten aufweist, wobei die Wiederholungseinheiten aus der Gruppe bestehend aus (U), (V), (W), (X), (Y) und (Z) ausgewählt sind.

Es ist weiterhin bevorzugt, dass die polyester-polyethermodifizierte Polybutadiene dadurch gekennzeichnet sind, dass 0 % bis 80 %, bevorzugt 0 % bis 30 %, besonders bevorzugt 0 % bis 10% und ganz besonders bevorzugt 0 % bis 5 % der enthaltenen Doppelbindungen 1,2-Vinyl-Doppelbindungen sind und 20% bis 100%, bevorzugt 70 % bis 100 %, besonders bevorzugt 90 % bis 100% und ganz besonders bevorzugt 95 % bis 100 % der enthaltenen Doppelbindungen 1,4-Doppelbindungen sind.

Ganz besonders bevorzugt sind solche polyester-polyethermodifizierten Polybutadiene, die sich von den oben beschriebenen Polybutadienen Polyvest^{®} 110 und Polyvest^{®} 130 der Evonik Industries AG / Evonik Operations GmbH sowie Lithene ultra AL und Lithene ActiV 50 von Synthomer PLC ableiten.

Die Molmasse und die Polydispersität der Reste B ist beliebig. Es ist aber bevorzugt, dass die mittlere Molmasse der Reste B von 100 g/mol bis 20000 g/mol, bevorzugt von 200 g/mol bis 15000 g/mol, besonders bevorzugt von 400 g/mol bis 10000 g/mol beträgt. Die mittlere Molmasse der Reste B kann aus der Einwaage der eingesetzten Monomere bezogen auf die Anzahl der OH-Gruppen des eingesetzten hydroxyfunktionellen Polybutadiens (E) berechnet werden. Werden also beispielsweise 40 g Ethylenoxid eingesetzt und weist die Menge des eingesetzten hydroxyfunktionellen Polybutadiens (E) 0,05 mol OH-Gruppen auf, so beträgt die mittlere Molmasse des Rests B 800 g/mol.

Die polyester-polyethermodifizierten Polybutadiene sind je nach Zusammensetzung und Molmasse flüssig, pastös oder fest.

Die zahlenmittlere Molmasse Mₙ der polyester-polyethermodifizierten Polybutadiene beträgt bevorzugt von 1000 g/mol bis 6000 g/mol, weiter bevorzugt von 1500 g/mol bis 5000 g/mol, besonders bevorzugt von 2000 g/mol bis 4000 g/mol.

Ihre Polydispersität ist in weiten Bereichen variabel. Die Polydispersität des mindestens einen polyester-polyethermodifizierten Polybutadiens liegt nach GPC-Methode gegen PPG-Standard bevorzugt bei M_{w}/Mₙ von 1,5 bis 10, weiter bevorzugt zwischen 2 und 9, besonders bevorzugt zwischen 3 und 8.

Ein weiterer Gegenstand der Erfindung ist ein Verfahren zur Herstellung von vorzugsweise linearen Polybutadienen, die kammständig (seitständig) mit Polyetherresten modifiziert sind, die mindestens eine Estergruppe aufweisen, bereitzustellen. Angelehnt an die Europäische Patentanmeldung EP 19212066.5 bzw. PCT/EP2020/083013 sollte das Verfahren einen prozesstechnisch sehr einfachen Zugang zu vorzugsweise linearen Polybutadienen mit seitständigen Polyetherresten ermöglichen und beispielsweise ohne Verwendung von lithiumorganischen Verbindungen durchführbar sein. Die polyethermodifizierten Polybutadiene sollten dabei ferner durch eine direkte Alkoxylierung von seitständig hydroxyfunktionellen Polybutadienen erhältlich sein. Dabei bestand zudem die Aufgabe, im Verfahren verbesserte seitständig hydroxyfunktionelle Polybutadiene als Vorprodukte und Kettenstarter für die Alkoxylierung bereitzustellen.

Basierend auf die Lehre der Europäischen Patentanmeldung EP 19212066.5 bzw. PCT/EP2020/083013 wurde nun gefunden, dass ein Verfahren zu Herstellung von polyester-polyethermodifizierten Polybutadienen folgende Schritte umfasst:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G)
d) Umsetzung des mindestens einen polyethermodifizierten Polybutadiens (G) mit mindestens einer Verbindung (I) zur mindestens einem polyether-polyester-modifizierten Polybutadien (H).

Überraschenderweise wurde gefunden, dass sich Polybutadiene mit hohem Anteil an 1,4-Einheiten und geringem Gehalt an vinylischen 1,2- Einheiten nach der Epoxidierung mit Wasserstoffperoxid leicht unter sauer katalysierter Ringöffnung mit OH-funktionellen Verbindungen in seitständig OH-funktionelle Polybutadiene (Polybutadienole) umwandeln und anschließend mit Alkylenoxiden alkoxylieren lassen.

Gegenstände der vorliegenden Erfindung sind in den unabhängigen Ansprüchen formuliert. Vorteilhafte Ausgestaltungen der Erfindung sind in den nachgeordneten Ansprüchen, den Beispielen und der Beschreibung angegeben.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Die in dieser Erfindung aufgeführten Formeln beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten. Die verwendeten Indexzahlen sowie die Wertbereiche der angegebenen Indizes werden als Mittelwerte der möglichen statistischen Verteilung der tatsächlichen vorhandenen Strukturen und/oder deren Mischungen verstanden. Die verschiedenen Fragmente beziehungsweise Wiederholungseinheiten der in den nachfolgenden Formeln (1) bis (5) beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Wiederholungseinheiten mitumfasst. Werden also im Rahmen der vorliegenden Erfindung Verbindungen, wie z.B. Polybutadiene (A), epoxyfunktionelle Polybutadiene (C), hydroxyfunktionelle Polybutadiene (E), polyethermodifizierte Polybutadiene (G) oder polyether-polyester-modifizierten Polybutadien (H). beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein weiterer Gegenstand der Erfindung ist somit ein Verfahren zur Herstellung von einem oder mehreren polyester-polyethermodifizierten Polybutadienen, umfassend die Schritte:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G),
d) Umsetzung des mindestens einen polyethermodifizierten Polybutadiens (G) mit mindestens einer Verbindung (I) zur mindestens einem polyether-polyester-modifizierten Polybutadien (H).

Vorzugsweise kann für Schritt d) ein Katalysator als Initiator der anionischen Ringöffnungspolymerisation dienen. Es können alle gängigen Katalysatoren eingesetzt werden.

Als Katalysatoren können vorzugsweise Basen oder Säuren, Metallsalze, Metallakoxid oder Metallverbindungen verwendet werden.

Bei Metallalkoxiden handelt es beispielsweise um Zirkoniumbutoxid, Tetraisopropyltitanat, Tetrabutyltitanat oder Titan(IV)-2-ethylhexyloxid.

Bei Metallsalzen handelt es beispielsweise um Zinkacetate, Kaliumacetate, Lithiumacetate, Natriumacetate, Calciumacetate, Bariumacetate, Magnesiumacetate, Kupferacetate, Cobaltacetate oder Zink-/ Bismutcarboxylate.

Bei Säurekatalysatoren handelt es sich z. B. um Toluolsulfonsäure oder Trifluoressigsäure.

Auch können Zinnchlorid, Zinnoctylat, Dibutylzinndilaurat oder Monobutylzinnoxid eingesetzt werden.

Es ist bevorzugt, dass das erfindungsgemäße Verfahren außerdem mindestens einen der folgenden optionale Schritte umfasst:
e) Farbaufhellung des mindestens einen polyethermodifizierten Polybutadiens (G). Vorzugsweise ist das Verfahren weiterhin dadurch gekennzeichnet, dass

| | |
|---|---|
| im Schritt a) | >0 % bis 70 %, bevorzugt 1 % bis 50 %, weiter bevorzugt 2 % bis 40 %, noch weiter bevorzugt 3% bis 30 % und besonders bevorzugt 4 % bis 20 % der Doppelbindungen des mindestens einen Polybutadiens (A) mit Hilfe von Perameisensäure, welche *in situ* aus Ameisensäure und HzOz erzeugt wird, epoxidiert werden; |
| im Schritt b) | an die Epoxidgruppen des mindestens einen epoxyfunktionellen Polybutadiens (C) unter Ringöffnung ein oder mehrere kurzkettige Alkohole mit 1 bis 6 Kohlenstoffatomen, insbesondere Isobutanol, addiert werden, wobei bevorzugt ein oder mehrere saure Katalysatoren, insbesondere Trifluormethansulfonsäure, eingesetzt werden; |
| im Schritt c) | an die entstandenen seitständigen OH-Gruppen des mindestens einen hydroxyfunktionellen Polybutadiens (E) eine oder mehrere epoxyfunktionelle Verbindungen (F) ausgewählt aus Alkylenoxiden und ggf. weiteren epoxyfunktionellen Monomeren in einer Alkoxylierungsreaktion addiert werden, wobei bevorzugt zusätzlich ein Zn/Co-Doppelmetallcyanid-Katalysator oder basische Katalysatoren wie Amine, Guanidine, Amidine, Alkalihydroxide oder Alkalialkoholate verwendet werden; |
| Im Schritt d) | optional die Umsetzung des mindestens einen polyethermodifizierten Polybutadiens (G) mit mindestens einer Verbindung (I) ausgewählt ist aus der Gruppe bestehend aus cyclischen Anhydriden, Lactonen oder cyclischen Carbonaten als Monomere oder Comonomere zu mindestens einem polyester-polyethermodifizierten Polybutadien (H) erfolgt; |
| im Schritt e) | optional die Farbaufhellung des mindestens einen polyethermodifizierten Polybutadiens (G) mit Aktivkohle und/oder Wasserstoffperoxid vorgenommen wird. |

Durch das erfindungsgemäße Verfahren wird es erstmalig ermöglicht, lineare Polybutadiene durch eine einfache direkte Alkoxylierung an den seitständigen OH-Gruppen mit kammständigen Polyetherresten zu modifizieren. Die Kettenlänge und Monomerabfolge im Polyetherrest kann in weiten Bereichen variiert werden. Die mittlere Anzahl der ans Polybutadien gebundenen Polyetherreste ist gezielt über den Grad der Epoxidierung und die Hydroxylfunktionalisierung einstellbar und eröffnet eine große strukturelle Vielfalt bei den hydroxyfunktionellen Polybutadienen (E).

Das im Stand der Technik bekannte Graften (Pfropfen) von Polyethern an Polybutadien erfolgt in der Praxis selten quantitativ und die Reaktionsprodukte enthalten üblicherweise freie Anteile an Polyethern und gegebenenfalls nicht funktionalisierte Polybutadiene. Die vorbeschriebene Addition von OH-funktionellen Polyethern über ihre OH-Gruppe an epoxidierte Polybutadiene geschieht ebenfalls meist unvollständig und die Produkte enthalten restliche, nicht umgesetzte Epoxidgruppen. Werden die Polyether im Überschuss eingesetzt, so lässt sich der Restgehalt and Epoxidgruppen zwar reduzieren, die Überschusspolyether verbleiben aber im Produkt, da sie destillativ nicht abgetrennt werden können.

Für den Schritt d) werden bevorzugt für Verbindung (I)
- cyclischen Anhydride, rein oder in beliebigen Mischungen, ausgewählt sind aus der Gruppe bestehend aus gesättigten, ungesättigten oder aromatischen cyclischen Dicarbonsäureanhydriden, bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid oder
- Lactone, rein oder in beliebigen Mischungen, ausgewählt sind aus der Gruppe bestehend aus Valerolactone, Caprolactone und Butyrolactone, die unsubstituiert oder mit Alkylgruppen, bevorzugt Methylgruppen, substituiert sein können, vorzugsweise ε-Caprolacton oder δ-Valerolacton.
eingesetzt.

Vorzugsweise kann für Schritt d) ein Katalysator als Initiator der anionischen Ringöffnungspolymerisation dienen. Als Katalysatoren können Basen oder Säuren, Metallsalze, Metallakoxid oder Metallverbindungen verwendet werden.

Bei Metallalkoxiden handelt es beispielsweise um Zirkoniumbutoxid, Tetraisopropyltitanat, Tetrabutyltitanat oder Titan(IV)-2-ethylhexyloxid.

Bei Metallsalzen handelt es beispielsweise um Zinkacetate, Kaliumacetate, Lithiumacetate, Natriumacetate, Calciumacetate, Bariumacetate, Magnesiumacetate, Kupferacetate, Cobaltacetate oder Zink-/ Bismutcarboxylate.

Bei Säurekatalysatoren handelt es sich z. B. um Toluolsulfonsäure oder Trifluoressigsäure.

Auch können Zinnchlorid, Zinnoctylat, Dibutylzinndilaurat oder Monobutylzinnoxid eingesetzt werden. Die erfindungsgemäß erhältlichen Polybutadiene mit kammständigen Polyester-Polyetherresten sind vorzugsweise im Wesentlichen frei von restlichen Epoxidgruppen. Das erfindungsgemäße Verfahrensprodukt enthält vorzugsweise im Wesentlichen keine freien Polyetheranteile. Vorzugsweise sind im Wesentlichen alle Polyether chemisch über eine Etherbindung an das Polybutadien angebunden. Damit unterscheiden sich die erfindungsgemäßen Verfahrensprodukte deutlich durch ihre erhöhte Reinheit von den bisher aus dem Stand der Technik bekannten Verbindungen.

Vorzugsweise wurde für die erfindungsgemäße Zusammensetzung die Verbindung auf Basis von linearen Polybutadienen hergestellt.

Vorzugsweise weist die die Verbindung für die erfindungsgemäße Zusammensetzung keine seitständigen (kammständigen) Polybutadiene auf.

Vorzugsweise weist die Verbindung ausschließlich seitständige (kammständige) Wiederholungseinheiten (U), (V) und/oder (W) auf.

### Zur bevorzugten Ausgestaltung von Schritt a) des erfindungsgemäßen Verfahrens:

Im Schritt a) des erfindungsgemäßen Verfahrens erfolgt die Umsetzung mindestens eines Polybutadiens (A) mit mindestens einem Epoxidierungsreagenz (B) zu mindestens einem epoxyfunktionellen Polybutadien (C).

Bei dieser Umsetzung werden Doppelbindungen des Polybutadiens (A) in Epoxidgruppen überführt. Verschiedene Methoden zur Epoxidierung von Polybutadienen mit z.B. Percarbonsäuren und Wasserstoffperoxid sind dem Fachmann bekannt und z.B. in CN 101538338, JP 2004346310, DD 253627 and WO 2016/142249 A1 offenbart. Besonders geeignet zur Herstellung der epoxyfunktionellen Polybutadiene (C) mit hohem Anteil an 1,4-Einheiten ist Perameisensäure, die auch *in situ* aus Ameisensäure in Gegenwart von Wasserstoffperoxid gebildet werden kann. Die Epoxidierung findet bevorzugt in einem Lösemittel wie Toluol oder Chloroform statt, das nach der Umsetzung und dem Auswaschen von evtl. Peroxidresten destillativ entfernt wird.

Die Polybutadiene (A) sind Polymere des Buta-1,3-diens. Die Polymerisation der Buta-1,3-dien-Monomere erfolgt dabei im Wesentlichen unter 1,4- und/oder 1,2-Verknüpfung. Eine 1,4-Verknüpfung führt zu sogenannten 1,4-trans-Einheiten und/oder 1,4-cis-Einheiten, die zusammengefasst auch als 1,4-Einheiten bezeichnet werden. Eine 1,2-Verknüpfung führt zu sogenannten 1,2-Einheiten. Die 1,2-Einheiten tragen eine Vinylgruppe und werden auch als vinylische 1,2-Einheiten bezeichnet. Die 1,2-Einheiten werden im Rahmen der vorliegenden Erfindung auch mit "(X)", die 1 ,4-*trans*-Einheiten mit "(Y)" und die 1 ,4-*cis*-Einheiten mit "(Z)" bezeichnet:

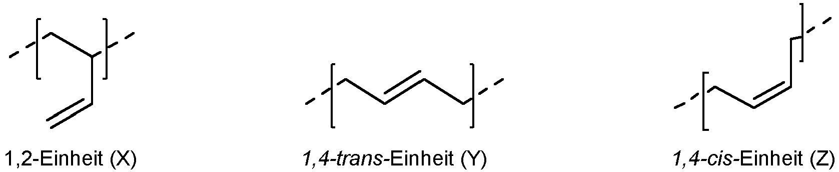

Die in den Einheiten enthaltenen Doppelbindungen werden analog als 1,4-*trans*-Doppelbindungen, 1,4-*cis*-Doppelbindungen beziehungsweise 1,2-Doppelbindungen oder 1,2-Vinyl-Doppelbindungen bezeichnet. Die 1,4-*trans*-Doppelbindungen und 1,4-*cis*-Doppelbindungen werden zusammenfassend auch als 1,4-Doppelbindungen bezeichnet.

Es handelt sich bei den Polybutadienen (A) also um unmodifizierte Polybutadiene. Die Polybutadiene (A) und ihre Herstellverfahren sind dem Fachmann bekannt. Die Herstellung erfolgt vorzugsweise mittels einer radikalischen, einer anionischen oder einer koordinativen Kettenpolymerisation.

Die radikalische Kettenpolymerisation wird bevorzugt als Emulsionspolymerisation durchgeführt. Dies führt zu einem statistischen Auftreten der drei genannten Einheiten. Bei niedriger Reaktionstemperatur (ca. 5 °C) sinkt der Anteil an Vinylgruppen. Die Initiierung erfolgt vorzugsweise mit Kaliumperoxodisulfat und Eisensalzen oder auch mit Wasserstoffperoxid.

Bei der anionischen Kettenpolymerisation erfolgt die Initiierung der Kettenpolymerisation vorzugsweise mit Butyllithium. Das so erhaltene Polybutadien (A) enthält etwa 40 % 1,4-*cis*-Einheiten und 50 % 1,4-*trans*-Einheiten.

Bei der koordinativen Kettenpolymerisation werden vorzugsweise Ziegler-Natta-Katalysatoren eingesetzt, insbesondere stereospezifische Ziegler-Natta-Katalysatoren, die zu einem Polybutadien (A) mit einem hohen Anteil an 1,4-*cis*-Einheiten führen.

Bei der Polymerisation von 1,3-Butadien können durch Neben- oder Folgereaktionen, wie z.B. einer Folgereaktion der Doppelbindungen der resultierenden 1,2- und 1,4-Einheiten des Polybutadiens, auch verzweigte Polybutadiene (A) entstehen. Bevorzugt handelt es sich bei den erfindungsgemäß eingesetzten Polybutadienen (A) aber um lineare, also unverzweigte Polybutadiene. Es ist auch möglich, dass die Polybutadiene in geringen Anteilen andere Einheiten als 1,2-Einheiten, 1,4*-trans-*Einheiten oder 1,4-*cis*-Einheiten aufweisen. Es ist aber bevorzugt, dass der Massenanteil der Summe von 1,2-Einheiten, 1,4-*trans*-Einheiten und 1,4-*cis*-Einheiten mindestens 80 %, vorzugweise mindestens 90 %, insbesondere mindestens 99% bezogen auf die Gesamtmasse des mindestens einen Polybutadiens (A), also bezogen auf die Gesamtmasse aller eingesetzten Polybutadiene (A), beträgt.

Für das erfindungsgemäße Verfahren werden vorzugsweise solche Polybutadiene (A) verwendet, die 0 % bis 80 % 1,2-Einheiten und 20 % bis 100 % 1,4-Einheiten, bevorzugt 0 % bis 30 % 1,2-Einheiten und 70 % bis 100 % 1,4-Einheiten, besonders bevorzugt 0 % bis 10 % 1,2-Einheiten und 90 % bis 100 % 1,4-Einheiten, und ganz besonders bevorzugt 0 % bis 5 % 1,2-Einheiten und 95 % bis 100 % 1,4-Einheiten bezogen auf die Summe aus 1,2-Einheiten und 1,4-Einheiten aufweisen.

Es ist also bevorzugt, dass von den Doppelbindungen aller eingesetzten Polybutadiene (A) 0 % bis 80 % 1,2-Vinyl-Doppelbindungen und 20 % bis 100 % 1,4-Doppelbindungen, bevorzugt 0 % bis 30 % 1,2-Vinyl-Doppelbindungen und 70 % bis 100 % 1,4-Doppelbindungen, besonders bevorzugt 0 % bis 10 % 1,2-Vinyl-Doppelbindungen und 90 % bis 100 % 1,4-Doppelbindungen, ganz besonders bevorzugt 0 % bis 5 % 1,2-Vinyl-Doppelbindungen und 95 % bis 100 % 1,4-Doppelbindungen sind.

Für die erfindungsgemäße Herstellung der Produkte werden entsprechend vorzugsweise Polybutadiene (A) der Formel (1) 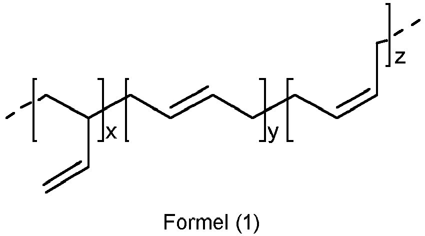 mit einem Gehalt von 0 % bis 80 % 1,2-Vinyl-Doppelbindungen (Index x) und 20 % bis 100 % 1,4-Doppelbindungen (Summe der Indizes y und z), bevorzugt 0 % bis 30 % 1,2-Vinyl-Doppelbindungen und 70 % bis 100 % 1,4-Doppelbindungen, besonders bevorzugt mit 0 % bis 10 % 1,2-Vinyl-Doppelbindungen und 90 % bis 100 % 1,4-Doppelbindungen, ganz besonders bevorzugt mit 0 % bis 5 % 1,2-Vinyl-Doppelbindungen und 95 % bis 100 % 1,4-Doppelbindungen verwendet. Das Verhältnis von 1,4-*trans*-Doppelbindungen (Index y) und 1,4-cis-Doppelbindungen (Index z) ist beliebig.

Die Indizes x, y und z geben dabei die Anzahl der jeweiligen Butadien-Einheit im Polybutadien (A) wieder. Es handelt sich dabei um numerische Mittelwerte (Zahlenmittel) über die Gesamtheit aller Polybutadienpolymere des mindestens einen Polybutadiens (A).

Die mittlere Molmasse und Polydispersität der verwendeten Polybutadiene (A) nach Formel (1) ist beliebig.

Es ist bevorzugt, dass die zahlenmittlere Molmasse Mₙ des mindestens einen Polybutadiens (A) von 200 g/mol bis 20000 g/mol, bevorzugt von 500 g/mol bis 10000 g/mol, besonders bevorzugt von 700 g/mol bis 5000 g/mol beträgt.

Alternativ ist es bevorzugt, dass die zahlenmittlere Molmasse Mₙ des mindestens einen Polybutadiens (A) von 2100 g/mol bis 20000 g/mol, besonders bevorzugt von 2200 g/mol bis 10000 g/mol, ganz besonders bevorzugt von 2300 g/mol bis 5000 g/mol beträgt.

Die zahlenmittlere Molmasse Mₙ, die gewichtsmittlere Molmasse M_{w} und die Polydispersität (M_{w}/Mₙ) werden im Rahmen der vorliegenden Erfindung vorzugsweise mittels Gel-Permeations-Chromatographie (GPC) bestimmt, wie in den Beispielen beschrieben.

Es ist weiterhin bevorzugt, dass das mindestens eine Polybutadien (A) im Zahlenmittel 5 bis 360, besonders bevorzugt 10 bis 180, ganz besonders bevorzugt 15 bis 90 Einheiten ausgewählt aus der Gruppe bestehend aus 1,2-Einheiten, 1,4-*cis*-Einheiten und 1,4-*trans*-Einheiten aufweist.

Alternativ ist es bevorzugt, dass das mindestens eine Polybutadien (A) im Zahlenmittel 35 bis 360, besonders bevorzugt 40 bis 180, ganz besonders bevorzugt 45 bis 90 Einheiten ausgewählt aus der Gruppe bestehend aus 1,2-Einheiten, 1,4-cis-Einheiten und 1,4-*trans-*Einheiten aufweist.

Es ist weiterhin bevorzugt, dass die Viskosität der verwendeten Polybutadiene (A) 50 bis 50000 mPas vorzugsweise 100 bis 10000 mPas, insbesondere 500 bis 5000 mPas beträgt (bestimmt gemäß DIN EN ISO 3219:1994-10).

Besonders bevorzugt eingesetzte Polybutadiene sind die von Evonik Industries AG / Evonik Operations GmbH kommerziell erhältlichen Produkte Polyvest^{®} 110 und Polyvest^{®} 130 mit den folgenden typischen Kenndaten:
Polyvest^{®} 110: ca. 1 % 1,2-Vinyl-Doppelbindungen, ca. 24 % 1,4-*trans-*Doppelbindungen, ca. 75 % 1,4-*cis*-Doppelbindungen, zahlenmittlere Molmasse Mₙ ca. 2600 g/mol, Viskosität (20 °C) 700-860 mPas (gemäß DIN EN ISO 3219:1994-10),
Polyvest^{®} 130: ca. 1 % 1,2-Vinyl-Doppelbindungen, ca. 22 % 1,4-*trans*-Doppelbindungen, ca. 77 % 1,4-*cis-*Doppelbindungen, zahlenmittlere Molmasse Mₙ ca. 4600 g/mol, Viskosität (20 °C) 2700-3300 mPas (gemäß DIN EN ISO 3219:1994-10).

Besonders bevorzugt eingesetzte Polybutadiene sind weiterhin die von Synthomer PLC erhältlichen Produkte Lithene ultra AL und Lithene ActiV 50 mit den folgenden typischen Kenndaten:
Lithene ultra AL: ca. 40 % 1,2-Vinyl-Doppelbindungen, ca. 60 % 1,4- Doppelbindungen,
Lithene ActiV 50: ca. 70 % 1,2-Vinyl-Doppelbindungen, ca. 30% 1,4- Doppelbindungen.

Der Epoxidierungsgrad wird z.B. mit Hilfe der ¹³C-NMR-Spektroskopie oder der Epoxidzahl-Titration (Bestimmungen des Epoxid-Äquivalents gemäß DIN EN ISO 3001:1999) quantitativ bestimmt und kann über die Prozessbedingungen, insbesondere über die Einsatzmenge an Wasserstoffperoxid in Relation zur vorgelegten Menge an Doppelbindungen im Polybutadien, gezielt und reproduzierbar eingestellt werden.

Es ist bevorzugt, dass im Schritt a) des erfindungsgemäßen Verfahrens >0 % bis 70 %, bevorzugt 1 % bis 50 %, weiter bevorzugt 2 % bis 40 %, noch weiter bevorzugt 3% bis 30 % und besonders bevorzugt 4 % bis 20 % aller Doppelbindungen des mindestens einen Polybutadiens (A) epoxidiert werden.

Als Epoxidierungsreagenz (B) sind prinzipiell alle dem Fachmann bekannten Epoxidierungsmittel einsetzbar. Es ist bevorzugt, dass das Epoxidierungsreagenz (B) ausgewählt ist aus der Gruppe der Peroxycarbonsäuren (Percarbonsäuren, Persäuren), vorzugsweise aus der Gruppe bestehend aus *meta*-Chlorperbenzoesäure, Peroxyessigsäure (Peressigsäure) und Peroxyameisensäure (Perameisensäure), insbesondere Peroxyameisensäure (Perameisensäure). Die Peroxycarbonsäuren werden dabei vorzugsweise *in situ* aus der entsprechenden Carbonsäure und Wasserstoffperoxid gebildet.

Es ist besonders bevorzugt, dass das mindestens eine Epoxidierungsreagenz (B) Perameisensäure enthält, welche vorzugweise *in situ* aus Ameisensäure und Wasserstoffperoxid gebildet wird.

Die Epoxidierung des mindestens einen Polybutadiens (A) findet statistisch über die Polybutadienkette verteilt bevorzugt an den 1,4-Doppelbindungen statt. Eine Epoxidierung der 1,2-Doppelbindungen kann ebenfalls stattfinden und findet an diesen ebenfalls statistisch über die Polybutadienkette verteilt statt. Eine Epoxidierung der 1,2-Doppelbindungen ist aber gegenüber einer Epoxidierung der 1,4-Doppelbindungen benachteiligt. Das Reaktionsprodukt enthält somit epoxyfunktionelle Polybutadienpolymere, die sich in ihrem Epoxidierungsgrad voneinander unterscheiden. Alle angegebenen Epoxidierungsgrade sind daher als Mittelwerte zu verstehen.

Es ist weiterhin bevorzugt, während des erfindungsgemäßen Verfahrens zur Stabilisierung der Edukte, Intermediate und Produkte, Stabilisatoren bzw. Antioxidantien zu verwenden, um ungewollte Polymerisationsreaktionen der Doppelbindungen zu vermeiden. Hierfür eignen sich z.B. die dem Fachmann bekannten sterisch gehinderten Phenole, kommerziell erhältlich zum Beispiel als Anox^{®} 20, Irganox^{®} 1010 (BASF), Irganox^{®} 1076 (BASF) und Irganox^{®} 1135 (BASF). Es ist ferner bevorzugt, den gesamten Herstellprozess unter einer Inertatmosphäre, z.B. unter Stickstoff, durchzuführen. Auch sollten vorzugsweise die unmodifizierten Edukte, also das mindestens eine Polybutadien (A), wie auch die erfindungsgemäßen polyethermodifizierten Fertigprodukte, also das mindestens eine polyethermodifizierte Polybutadien (G) bzw. (K), möglichst unter Ausschluss von Luft aufbewahrt werden.

### Zur bevorzugten Ausgestaltung von Schritt b) des erfindungsgemäßen Verfahrens:

Im Schritt b) des erfindungsgemäßen Verfahrens erfolgt die Umsetzung des mindestens einen epoxyfunktionellen Polybutadiens (C) mit mindestens einer hydroxyfunktionellen Verbindung (D) zu mindestens einem hydroxyfunktionellen Polybutadien (E).

Bei dieser Umsetzung findet eine Addition (Additionsreaktion) der mindestens einen hydroxyfunktionellen Verbindung (D) an das mindestens eine epoxyfunktionelle Polybutadien (C) statt. Die Umsetzung erfolgt also unter Bildung von einer oder mehreren kovalenten Bindungen zwischen der mindestens einen hydroxyfunktionellen Verbindung (D) und dem mindestens einen epoxyfunktionellen Polybutadien (C). Die Umsetzung umfasst vorzugsweise (zumindest idealisiert) einen Reaktionsschritt, bei dem ein nukleophiler Angriff mindestens einer Hydroxygruppe der mindestens einen hydroxyfunktionellen Verbindungen (D) an mindestens eine Epoxygruppe des mindestens einen epoxyfunktionellen Polybutadiens (C) unter Ringöffnung dieser mindestens einen Epoxygruppe erfolgt.

Prinzipiell können im Sinne des erfindungsgemäßen Verfahrens alle Verbindungen mit mindestens einer Hydroxylgruppe an die Epoxidgruppen des Polybutadiens addiert werden. Hydroxyfunktionelle Verbindungen (D) können beispielsweise aus der Gruppe bestehend aus Alkoholen, Carbonsäuren und Wasser ausgewählt werden. Bevorzugt wird die mindestens eine hydroxyfunktionelle Verbindungen (D) aus der Gruppe der monofunktionellen Alkohole mit 1 bis 6 Kohlenstoffatomen, weiter bevorzugt aus der Gruppe der monofunktionellen Alkohole mit 2 bis 4 Kohlenstoffatomen, besonders bevorzugt aus der Gruppe bestehend aus Ethanol, 1-Propanol, Isopropanol (iso-Propanol), 1-Butanol, 2-Butanol und Isobutanol (iso-Butanol) ausgewählt. Dabei können auch beliebige Gemische dieser Alkohole eingesetzt werden. Es ist aber insbesondere bevorzugt, dass als hydroxyfunktionelle Verbindung (D) nicht Methanol eingesetzt wird. Als hydroxyfunktionelle Verbindung (D) ist auch Wasser geeignet. Wasser kann allein oder in Mischung mit einer oder mehreren anderen hydroxyfunktionellen Verbindungen (D) eingesetzt werden. So können beispielsweise Mischungen von Alkohol und Wasser oder Mischungen von Carbonsäure und Wasser im Schritt b) eingesetzt werden. Es ist also nicht nötig, die mindestens eine hydroxyfunktionelle Verbindung (D), wie beispielsweise Alkohol oder Carbonsäure, zu trocknen und von Wasser zu befreien.

Das molare Verhältnis der OH-Gruppen der hydroxyfunktionellen Verbindung (D) zu den Epoxidgruppen des epoxyfunktionellen Polybutadiens (C) kann in einem weiten Bereich variiert werden. Es ist aber bevorzugt, die hydroxyfunktionellen Verbindungen (D) bezogen auf das stöchiometrische Verhältnis von Hydroxygruppen zu den Epoxidgruppen des epoxyfunktionellen Polybutadiens (C) in einem stöchiometrischen Überschuss einzusetzen, um einen quantitativen Umsatz aller Epoxidgruppen zu erreichen. Es ist daher bevorzugt, dass im Schritt b) die Gesamtzahl der Hydroxygruppen aller hydroxyfunktionellen Verbindungen (D) zur Gesamtzahl der Epoxidgruppen aller epoxyfunktionellen Polybutadiene (C) von >1:1 bis 50:1, weiter bevorzugt von 2:1 bis 35:1, noch weiter bevorzugt 3:1 bis 30:1, besonders bevorzugt von 3:1 bis 25:1 beträgt. Der Überschuss an Verbindung (D) kann nach der Umsetzung z.B. destillativ entfernt und bei Bedarf wiederverwendet werden.

In einer bevorzugten Ausführungsform findet die Reaktion in Anwesenheit mindestens eines sauren Katalysators statt. Der Katalysator ist wahlweise im Reaktionsgemisch homogen löslich oder heterogen als Feststoff darin verteilt, wie z.B. sulfonsaure Ionenaustauscher. Bevorzugt im Sinne der Erfindung sind Katalysatoren wie Schwefelsäure, Sulfonsäuren und Trifluoressigsäure, besonders bevorzugt ist Trifluormethansulfonsäure. Es ist also bevorzugt, dass im Schritt b) eine Säure, weiter bevorzugt Schwefelsäure, Sulfonsäuren und/oder Trifluoressigsäure, besonders bevorzugt Trifluormethansulfonsäure als Katalysator eingesetzt wird.

Die Art und Einsatzmenge der Säure werden so gewählt, dass eine möglichst rasche und quantitative Addition der mindestens einen hydroxyfunktionellen Verbindung (D) an die Epoxidgruppen des mindestens einen epoxyfunktionellen Polybutadiens (C) erfolgt. Vorzugsweise wird Trifluormethansulfonsäure in einer Konzentration von 1 wppm bis 1000 wppm (wppm = Massen-ppm), besonders bevorzugt in einer Konzentration von 50 wppm bis 300 wppm bezogen auf die Reaktionsmischung eingesetzt.

Die Reaktion des mindestens einen epoxyfunktionellen Polybutadiens (C) mit der mindestens einen hydroxyfunktionellen Verbindung (D) in Gegenwart eines sauren Katalysators findet vorzugsweise im Temperaturbereich von 20 °C bis 120 °C statt und ist nach oben durch den Siedepunkt der hydroxyfunktionellen Verbindung (D) bzw. bei Verwendung mehrerer hydroxyfunktioneller Verbindungen (D) durch den Siedepunkt der flüchtigsten hydroxyfunktionellen Verbindung (D) begrenzt. Bevorzugt wird die Umsetzung bei 50 °C bis 90 °C durchgeführt. Die Komponenten werden einige Stunden gerührt, bis die Epoxidgruppen möglichst vollständig umgesetzt sind. Die Analyse auf Epoxidgruppen kann wahlweise durch NMR-spektroskopische Analyse oder durch bekannte Methoden der Epoxidzahl-Titration erfolgen (wie in den Beispielen beschrieben). Die Reaktionsbedingungen in Schritt b) werden vorzugsweise so gewählt, dass mehr als 97 % der in Schritt a) generierten Epoxidgruppen unter Ringöffnung umgesetzt werden. Es ist besonders bevorzugt, dass im Produkt von Schritt b), also im mindestens einen hydroxyfunktionellen Polybutadien (E), keine Epoxidgruppen mehr nachweisbar sind.

Nach der Reaktion wird das saure Reaktionsgemisch neutralisiert. Zu diesem Zweck kann prinzipiell jedes basische Neutralisationsmittel zugesetzt werden. Bevorzugt wird die Neutralisation mit Natriumhydrogencarbonat, in fester Form oder als wässrige Lösung, durchgeführt. Die gegebenenfalls überschüssigen hydroxyfunktionellen Verbindungen (D) sowie gegebenenfalls Wasser werden vorzugsweise destillativ entfernt und ausgefallene Salze werden bei Bedarf abfiltriert. Bevorzugt ist dabei die Verwendung von wässriger Natriumhydrogencarbonat-Lösung, da so farbhellere Produkte erhalten werden.

Aus jeweils einer Epoxidgruppe eines epoxyfunktionellen Polybutadiens (C) resultiert nach Ringöffnung durch eine hydroxyfunktionelle Verbindung (D) der Formel A-OH eine Wiederholungseinheit der Formel (2a), (2b) oder (2c):

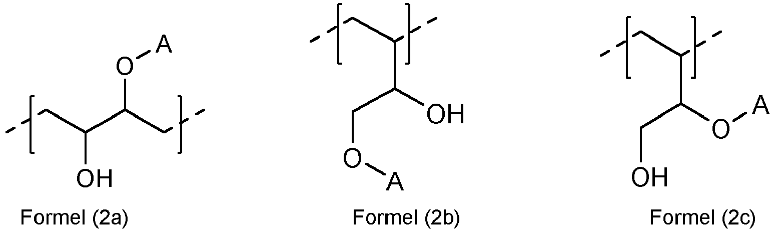

A ist dabei vorzugsweise ein einbindiger organischer Rest, der auch weitere Hydroxylgruppen tragen kann, oder ein Wasserstoffradikal. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Im Fall von Wasser als hydroxyfunktionelle Verbindung (D) ist A ein Wasserstoffradikal, also A = H. Wird beispielsweise eine Carbonsäure als hydroxyfunktionelle Verbindung (D) eingesetzt, so ist A ein Acylrest. Es resultiert also aus jeder umgesetzten Epoxidgruppe mindestens eine seitständige OH-Gruppe. Ist, wie im Fall von Wasser, A = H so resultieren aus jeder umgesetzten Epoxidgruppe genau zwei seitständige OH-Gruppen. In allen anderen Fällen, also A ≠ H, resultiert aus jeder umgesetzten Epoxidgruppe genau eine seitständige OH-Gruppe.

Im Falle der erfindungsgemäß bevorzugten Polybutadiene (A) mit einem überwiegenden Anteil von 1,4-Einheiten, überwiegen von den Wiederholungseinheiten der Formeln (2a), (2b) und (2c) solche der Formel (2a).

Es ist bevorzugt, dass das mindestens eine hydroxyfunktionelle Polybutadien (E) 20 % bis 100 %, bevorzugt 70 % bis 100 %, weiter bevorzugt 90 % bis 100 %, besonders bevorzugt 95 % bis 100% Wiederholungseinheiten der Formel (2a) bezogen auf die Summe der Wiederholungseinheiten der Formeln (2a), (2b) und (2c) aufweist.

Es ist weiterhin bevorzugt, dass der Anteil der Wiederholungseinheiten der Formeln (2a), (2b) und (2c) zusammengenommen >0 % bis 70 %, bevorzugt 1 % bis 50 %, weiter bevorzugt 2 % bis 40 %, noch weiter bevorzugt 3% bis 30 % und besonders bevorzugt 4 % bis 20 % bezogen auf die Gesamtzahl aller Wiederholungseinheiten des mindestens einen hydroxyfunktionellen Polybutadiens (E) beträgt. Es ist entsprechend bevorzugt, dass der Hydroxylierungsgrad >0 % bis 70 %, bevorzugt 1 % bis 50 %, weiter bevorzugt 2 % bis 40 %, noch weiter bevorzugt 3% bis 30 % und besonders bevorzugt 4 % bis 20 % beträgt. Bei vollständiger Umsetzung in Schritt b) entspricht der Hydroxylierungsgrad des hydroxyfunktionellen Polybutadiens (E) dem Epoxidierungsgrad des entsprechenden epoxyfunktionellen Polybutadiens (C).

### Zur bevorzugten Ausgestaltung von Schritt c) des erfindungsgemäßen Verfahrens:

Im Schritt c) des erfindungsgemäßen Verfahrens erfolgt die Umsetzung des mindestens einen hydroxyfunktionellen Polybutadiens (E) mit mindestens einer epoxyfunktionellen Verbindung (F) zu mindestens einem polyethermodifizierten Polybutadien (G).

Das mindestens eine hydroxyfunktionelle Polybutadien (E) aus Schritt b) dient im Schritt c) als Startverbindung für die Umsetzung mit der mindestens einen epoxyfunktionellen Verbindung (F). Unter Ringöffnung und vorzugsweise in Gegenwart eines geeigneten Katalysators wird die mindestens eine epoxyfunktionelle Verbindung (F) (im Folgenden auch einfach als "Monomer" oder "Epoxidmonomer" oder "Epoxid" bezeichnet), in einer Polyadditionsreaktion an die OH-Gruppen des mindestens einen hydroxyfunktionellen Polybutadiens (E) addiert. Dies führt zur Bildung der erfindungsgemäßen Polybutadiene mit kammständigen (seitständigen) Polyetherketten, also zur Bildung des mindestens einen polyethermodifizierten Polybutadiens (G). Vorzugsweise ist das polyethermodifizierte Polybutadien (G) ein lineares Polybutadien, das kammständig (seitständig) mit Polyetherresten modifiziert ist. Es ist also bevorzugt, dass das polyethermodifizierte Polybutadien (G) ein lineares Polybutadien-Rückgrat und seitständige Polyetherreste aufweist.

Bei der Umsetzung im Schritt c) handelt es sich vorzugsweise um eine Alkoxylierungsreaktion, also um eine Polyaddition von Alkylenoxiden an das mindestens eine hydroxyfunktionelle Polybutadien (E). Die Umsetzung im Schritt c) kann aber alternativ oder zusätzlich zu den Alkylenoxiden auch mit Glycidylverbindungen durchgeführt werden.

Es ist daher bevorzugt, dass die mindestens eine im Schritt c) eingesetzte epoxyfunktionelle Verbindung aus der Gruppe der Alkylenoxide, bevorzugt aus der Gruppe der Alkylenoxide mit 2 bis 18 Kohlenstoffatomen, weiter bevorzugt aus der Gruppe der Alkylenoxide mit 2 bis 8 Kohlenstoffatomen, besonders bevorzugt aus der Gruppe bestehend aus Ethylenoxid, Propylenoxid, 1-Butylenoxid, *cis-*2-Butylenoxid, *trans*-2-Butylenoxid, Isobutylenoxid und Styroloxid ausgewählt ist; und/oder dass die mindestens eine im Schritt c) eingesetzte epoxyfunktionelle Verbindung aus der Gruppe der Glycidylverbindungen, bevorzugt aus der Gruppe der monofunktionellen Glycidylverbindungen, besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, C₁₂/C₁₄-Fettalkoholglycidylether und C₁₃/C₁₅-Fettalkoholglycidylether ausgewählt ist.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyetherkette unterliegt damit einer blockweisen Verteilung oder einer statistischen Verteilung oder einer graduellen Verteilung im Endprodukt.

Durch das erfindungsgemäße Verfahren werden seitständige Polyetherketten am Polybutadien aufgebaut, die sich dadurch auszeichnen, dass sie hinsichtlich Strukturaufbau und Molmasse gezielt und reproduzierbar hergestellt werden können.

Die Abfolge der Monomereinheiten kann in weiten Grenzen durch die Reihenfolge der Zugabe variabel gestaltet werden.

Die Molmassen der seitständigen Polyetherreste können nach dem erfindungsgemäßen Verfahren in weiten Grenzen variiert und gezielt und reproduzierbar über das Molverhältnis der zugefügten Monomere in Bezug auf die OH-Gruppen des mindestens einen vorgelegten hydroxyfunktionellen Polybutadiens (E) aus Schritt b) gesteuert werden.

Die erfindungsgemäß hergestellten polyethermodifizierten Polybutadiene (G) sind vorzugsweise dadurch gekennzeichnet, dass sie gemäß den Formeln (3a), (3b) und (3c) über eine Ethergruppe an das Polybutadiengerüst gebundene Reste B enthalten,

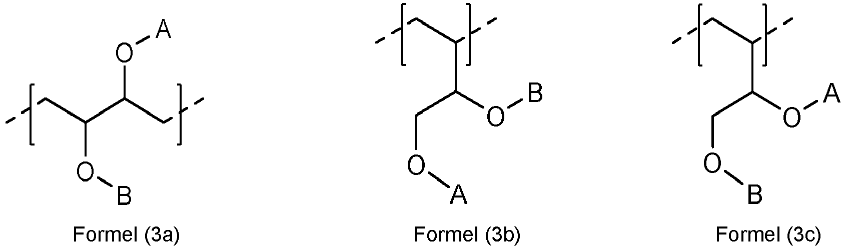

Wie oben zu Schritt b) ausgeführt wurde, stammt der Rest A in den Formeln (3a), (3b) und (3c) aus der Verbindung A-OH, also der im Schritt b) eingesetzten hydroxyfunktionellen Verbindung (D). Wie ebenfalls oben ausgeführt wurde, sind im Schritt b) zwei Fälle zu unterscheiden, nämlich A ≠ H oder A = H. Im ersten Fall, also für A ≠ H, ist der Rest A in den Formeln (3a), (3b) und (3c) identisch mit dem Rest A in den Formeln (2a), (2b) und (2c). Im zweiten Fall, also für A = H, ist der Rest A in den Formeln (3a), (3b) und (3c) jeweils unabhängig voneinander H oder ein Rest B. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Wird beispielsweise eine Carbonsäure als hydroxyfunktionelle Verbindung (D) eingesetzt, so ist A ein Acylrest. Wird jedoch Wasser als hydroxyfunktionelle Verbindung (D) eingesetzt, so ist A in den Formeln (3a), (3b) und (3c) im Falle der Umsetzung mit einer oder mehreren epoxyfunktionellen Verbindung (F) ein Rest B, im Falle der Nichtumsetzung bleibt A Wasserstoff. Es resultiert also aus jeder umgesetzten seitständigen Hydroxygruppe genau ein seitständiger Rest -O-B. Der Rest B ist wiederum aus einem oder mehreren Monomeren, vorzugsweise aus mehreren Monomeren, der mindestens einen eingesetzten epoxyfunktionellen Verbindung (F) aufgebaut.

Im Sinne der Erfindung können prinzipiell alle dem Fachmann bekannten Alkoxylierungskatalysatoren eingesetzt werden, z.B. basische Katalysatoren wie Alkalihydroxide, Alkalimetallalkoholate, Amine, Guanidine, Amidine, Phosphorverbindungen wie Triphenylphosphin, darüber hinaus saure und Lewissaure Katalysatoren wie SnCl₄, SnCl₂, SnF₂, BF₃ und BF₃-Komplexe, sowie Doppelmetallcyanid (DMC)-Katalysatoren.

Vor der Epoxidzufuhr, also vor der Zugabe der mindestens einen eingesetzten epoxyfunktionellen Verbindung (F), wird der mit dem Starter und Katalysator teilweise befüllte Reaktor z.B. mit Stickstoff inertisiert. Dies geschieht beispielsweise durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten Menge an Epoxidmonomer findet somit vorzugsweise in den evakuierten Reaktor statt. Die Dosage der Monomere erfolgt unter Rühren und ggf. Kühlen, um die freiwerdende Reaktionswärme abzuführen und die vorgewählte Reaktionstemperatur einzuhalten. Als Starter dient das mindestens eine hydroxyfunktionelle Polybutadien (E) oder es kann auch ein bereits entsprechend dem erfindungsgemäßen Verfahren hergestelltes polyethermodifiziertes Polybutadien (G) als Starter eingesetzt werden, wie weiter unten beschrieben wird.

### DMC-Katalyse

Vorzugsweise werden Zink/Cobalt-DMC-Katalysatoren eingesetzt, insbesondere solche, die Zinkhexacyanocobaltat(III) enthalten. Vorzugsweise werden die in US 5,158,922, US 20030119663, WO 01/80994 beschriebenen DMC-Katalysatoren eingesetzt. Die Katalysatoren können amorph oder kristallin sein.

Es ist bevorzugt, dass die Katalysatorkonzentration vorzugsweise bei > 0 wppm bis 1000 wppm, bevorzugt bei > 0 wppm bis 700 wppm, besonders bevorzugt bei 10 wppm bis 500 wppm bezogen auf die Gesamtmasse der entstehenden Produkte beträgt.

Vorzugsweise wird der Katalysator nur einmal in den Reaktor dosiert. Dieser sollte vorzugsweise sauber, trocken und frei von basischen Verunreinigungen sein, die den DMC-Katalysator inhibieren könnten. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der OH-funktionelle Starter als Suspensionsmittel.

Um die DMC-katalysierte Umsetzung zu starten, kann es vorteilhaft sein, den Katalysator zunächst mit einer Portion der mindestens einen epoxyfunktionellen Verbindung (F), vorzugsweise ausgewählt aus der Gruppe der Alkylenoxide, insbesondere mit Propylenoxid und/oder Ethylenoxid, zu aktivieren. Nach Anspringen der Alkoxylierungsreaktion kann mit der kontinuierlichen Monomerzugabe begonnen werden.

Die Reaktionstemperatur im Falle einer DMC-katalysierten Umsetzung in Schritt c) liegt vorzugweise bei 60 °C bis 200 °C, weiter bevorzugt bei 90 °C bis 160 °C und besonders bevorzugt bei 100 °C bis 140 °C.

Der Innendruck des Reaktors im Falle einer DMC-katalysierten Umsetzung in Schritt c) beträgt bevorzugt 0,02 bar bis 100 bar, weiter bevorzugt 0,05 bar bis 20 bar, besonders bevorzugt 0,1 bar bis 10 bar (absolut).

Besonders bevorzugt wird eine DMC-katalysierte Umsetzung in Schritt c) bei einer Temperatur von 100 °C bis 140 °C und einem Druck von 0,1 bar bis 10 bar durchgeführt.

Die Umsetzung kann z.B. zwecks Viskositätserniedrigung in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen (also Beibehaltung z.B. der Temperatur) ohne Zugabe von Edukten durchgeführt werden. Der DMC-Katalysator verbleibt üblicherweise im Reaktionsgemisch.

Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Das fertige Produkt wird abschließend bei <100 °C filtriert, um evtl. vorhandene Trübstoffe zu entfernen.

### Basische Katalyse

Neben den DMC-Katalysatoren können im Schritt c) erfindungsgemäß auch basische Katalysatoren verwendet werden. Geeignet sind insbesondere Alkalimetallalkoholate wie Natriummethanolat und Kaliummethanolat, die als Feststoff oder in Form ihrer methanolischen Lösungen zugefügt werden. Darüber hinaus können alle Alkalihydroxide, insbesondere Natriumhydroxid und Kaliumhydroxid eingesetzt werden, und zwar sowohl als Feststoff als auch als z.B. wässrige oder alkoholische Lösungen. Darüber hinaus können erfindungsgemäß auch basische Stickstoffverbindungen, bevorzugt Amine, Guanidine und Amidine, besonders bevorzugt tertiäre Amine wie Trimethylamin und Triethylamin verwendet werden.

Es ist bevorzugt, die basischen Katalysatoren in einer Konzentration von >0 mol-% bis 100 mol-%, bevorzugt >0 mol-% bis 50 mol-%, besonders bevorzugt 3 mol-% bis 40 mol-% bezogen auf die Menge der OH-Gruppen des Starters einzusetzen.

Die Reaktionstemperatur im Falle einer basisch katalysierten Umsetzung in Schritt c) liegt vorzugweise bei 80 °C bis 200 °C, weiter bevorzugt bei 90 °C bis 160 °C und besonders bevorzugt bei 100 °C bis 160 °C.

Der Innendruck des Reaktors im Falle einer basisch katalysierten Umsetzung in Schritt c) beträgt bevorzugt 0,2 bar bis 100 bar, weiter bevorzugt 0,5 bar bis 20 bar, besonders bevorzugt 1 bar bis 10 bar (absolut).

Besonders bevorzugt wird die basisch katalysierte Umsetzung in Schritt c) bei einer Temperatur von 100 °C bis 160 °C und einem Druck von 1 bar bis 10 bar durchgeführt.

Die Umsetzung kann optional in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen ohne Zugabe von Edukten durchgeführt werden. Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Flüchtige Katalysatoren wie Amine werden dabei entfernt.

Zur Neutralisation der basischen Rohprodukte werden Säuren wie Phosphorsäure oder Schwefelsäure oder Carbonsäuren wie Essigsäure und Milchsäure zugefügt. Bevorzugt ist der Einsatz wässriger Phosphorsäure und Milchsäure. Die Einsatzmenge der jeweiligen Säure richtet sich nach der zuvor verwendeten Menge an basischem Katalysator. Das basische Polybutadien mit seitständigen Polyetherresten wird in Gegenwart der Säure bei vorzugsweise 40 °C bis 95 °C gerührt und anschließend in einer Vakuumdestillation bei <100 mbar und 80 °C bis 130 °C trocken destilliert. Das neutralisierte Produkt wird abschließend vorzugsweise bei <100 °C filtriert, um ausgefällte Salze zu entfernen.

Es ist bevorzugt, dass die erfindungsgemäßen Endprodukte einen Wassergehalt von <0,2 % (angegeben als Massenanteil bezogen auf die Gesamtmasse des Endprodukts) und eine Säurezahl von <0,5 mg KOH/g haben und praktisch phosphatfrei sind.

### Produkte als Starter

Nicht immer ist es möglich, die gewünschte Molmasse des Endpropdukts in nur einem einzigen Reaktionsschritt, insbesondere Alkoxylierungsschritt, zu erreichen. Besonders, wenn lange Polyetherseitenketten angestrebt werden und/oder der Starter aus Schritt b) eine hohe OH-Funktionalität aufweist, müssen große Mengen an Epoxidmonomeren addiert werden. Dies lässt die Reaktorgeometrie manchmal nicht zu. Die erfindungsgemäß hergestellten polyethermodifizierten Polybutadiene (G) aus Schritt c) tragen an den Enden ihrer seitständigen Polyetherreste jeweils eine OH Gruppe und eignen sich daher ihrerseits als Starter für den Aufbau höhermolekularer Folgeprodukte. Sie stellen im Sinne der Erfindung Vorprodukte und Startverbindungen für die Synthese von Polybutadienen mit längeren Polyetherresten dar. Die Umsetzung der mindestens einen epoxyfunktionellen Verbindung (F) kann in Schritt c) also in mehreren Teilschritten erfolgen.

Ein mit Hilfe der DMC-Katalyse gemäß Schritt c) hergestelltes Produkt kann erfindungsgemäß wahlweise mittels DMC-Katalyse oder unter Einsatz einer der vorgenannten basischen oder sauren Katalysatoren durch erneute Addition von Epoxidmonomeren aufalkoxyliert werden. Optional kann weiterer DMC-Katalysator zugefügt werden, um z.B. die Reaktionsgeschwindigkeit bei der Kettenverlängerung zu steigern.

Ebenso kann ein unter Basenkatalyse hergestelltes Produkt aus Schritt c) wahlweise basisch, sauer oder mittels DMC-Katalyse zu höheren Molmassen alkoxyliert werden. In Schritt c) wird vorteilhaft auf die Neutralisation verzichtet, wenn beabsichtigt ist, das basische Vorprodukt weiter basenkatalysiert mit Monomeren umzusetzen. Optional kann weiterer basischer Katalysator zugefügt werden, um z.B. die Reaktionsgeschwindigkeit bei der Kettenverlängerung zu steigern.

### Zur bevorzugten Ausgestaltung von Schritt d) des erfindungsgemäßen Verfahrens:

In einem weiteren Schritt d) wird das mindestens eine polyethermodifizierte Polybutadien (G) mit mindestens einer Verbindung (I) zu mindestens einem polyester-polyethermodifizierten Polybutadien (H) umgesetzt.

Dabei werden die Reste B des polyethermodifizierten Polybutadiens (G), welche terminal Hydroxylgruppen aufweisen, terminal zu Estergruppen weiter umgesetzt. Hierbei werden Di-Lactide oder cyclischen Anhydride, rein oder in beliebigen Mischungen, ausgewählt sind aus der Gruppe bestehend aus gesättigten, ungesättigten oder aromatischen cyclischen Dicarbonsäureanhydriden, bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid und/oder Lactone, rein oder in beliebigen Mischungen, ausgewählt sind aus der Gruppe bestehend aus Valerolactone, Caprolactone und Butyrolactone, die unsubstituiert oder mit organischen Resten versehen, bevorzugt Methylgruppen, substituiert sein können, vorzugsweise ε-Caprolacton oder δ-Valerolacton eingesetzt.

Als cyclische Carbonate können generell alle dem Fachmann bekannten cyclischen Carbonate, zugänglich über die Insertion von CO2 in Epoxide, rein oder in beliebigen Mischungen eingesetzt werden. Bevorzugt kommen von Glycidethern abgeleitete Carbonate zum Einsatz, Besonders bevorzugt werden Propylencarbonat und Ethylencarbonat eingesetzt.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyesterkette unterliegt damit einer blockweisen Verteilung oder einer statistischen Verteilung oder einer graduellen Verteilung im Endprodukt.

### Optionaler Schritt e)

In einem optionalen Schritt e) wird das mindestens eine polyethermodifizierte Polybutadien (G) farblich aufgehellt.

Folgt der optionale Schritt e) auf den Schritt d) so wird dabei das mindestens eine polyester-polyethermodifizierte Polybutadien (H) farblich aufgehellt. Die Aufhellung kann aber auch nach Schritt c) des erfindungsgemäßen Verfahrens erfolgen und das mindestens eine polyethermodifizierte Polybutadien (G) wird farblich aufgehellt. Die Farbaufhellung kann beispielsweise durch den Zusatz von Aktivkohle, vorzugsweise in einem geeigneten Lösemittel, oder durch die Behandlung mit Wasserstoffperoxid erfolgen. Die Farbaufhellung kann bevorzugt über die Gardner-Farbzahl (bestimmt gemäß DIN EN ISO 4630) ermittelt werden. Es ist dabei bevorzugt, dass sich die Gardner-Farbzahl des polyethermodifizierten Polybutadiens (G) durch die Farbaufhellung um mindestens 1, vorzugsweise um mindestens 2 verringert. Besonders bevorzugt sind polyethermodifizierte Polybutadiene (G) mit eine Gardner-Farbzahl von maximal 3, insbesondere von maximal 2,5.

### Reaktoren

Als Reaktoren für das erfindungsgemäße Verfahren können prinzipiell alle geeigneten Reaktortypen zum Einsatz kommen, die die Reaktion und ihre eventuell vorhandene Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

Ein weiterer Gegenstand der Erfindung ist eine Zusammensetzung enthaltend eine erfindungsgemäße Verbindung mit mindestens eine Wiederholungseinheit (U)*, (V)* und/oder (W)*.

Vorzugsweise wird die erfindungsgemäße Zusammensetzung zur Herstellung von Beschichtungsstoffen, Farben und Lacke, als Druckfarbe oder Inkjettinte oder aber Dichtstoffen und Klebmassen verwendet.

Auch Gegenstand der Erfindung die Verwendung der erfindungsgemäßen Verbindung mit mindestens eine Wiederholungseinheit (U)*, (V)* und/oder (W)* als Haftvermittler, Entschäumer, Dispergieradditiv, Benetzungsmittel, Hydrophobierungs-, Rheologie-, Gleit-, Plastifizierungsadditive oder sonstige Additive für den Lack- und Farbenbereich.

Die erfindungsgemäßen Verbindungen können vorzugsweise in 1K-Beschichtungssystemen oder 2K-Beschichtungssystemen, in Melamin-Einbrenn-Systemen, Raum- oder Hochtemperatursystemen, UV-Systemen eingesetzt werden. Diese werden nach Zugabe der erfindungsgemäßen Substanzen hinsichtlich der haftungsverbessernden Eigenschaften auf diversen Substraten überprüft.

Vorzugsweise handelt es sich bei dem Substrat um Metall, Beton, Holz, und/oder ein Kompositmaterial wie z. B. Glasfaser und/oder Kohlenstofffaserverbundwerkstoff, Stahl (verschieden legiert und/oder nachbehandelt), Aluminium, mineralische Substrate wie etwa Glas, formstabile Kunststoffe und/oder Duromere.

Unter dem Begriff "metallische Substrate" werden folgende, jedoch nicht abschließende, Werkstoffe verstanden: Heiß und kalt gewalzter Stahl mit und ohne Nachbehandlung. Nicht Nachbehandelte Stähle werden vor dem Gebrauch durch spezielle Reiniger zum Beispiel der Firma GARDOBOND^{®} entfettet.

Als erste Schicht kann eine chemische Lösung zum Beispiel der Firma GARDOBOND^{®} Type 26 aufgetragen werden. Diese kann sowohl gespritzt (S) oder aber getaucht (T) werden. Die Nachbehandlung kann üblicherweise mit einer anorganischen Konversionsschicht basierend auf einer Phosphatierung, alkalischer Passivierung oder einer Chromatierung vorgenommen werden. Dies kann durch Feuer oder aber elektrolytische Verzinkung erfolgen. Es kann zum Beispiel eine wässrige Zinkphosphatlösung eingesetzt werden. Diese bildet eine Schicht aus tertiärem Zinkphosphat oder Zinkeisenphosphat aus.

Es kann aber auch eine Phosphatierung vorgenommen werden. Zum Beispiel wird eine wässrige Lösung mit primären Alkaliphosphaten verwendet. Diese Bleche können zum Beispiel von der Firma Q-LAB^{®} als Type R-I bezogen werden.

Anschließend wird zur Sicherstellung einer geschlossenen Schutzschicht auf dem Metall eine weitere chemische Spüllösung zur Passivierung verwendet. Üblicherweise wird zum einen VE-Wasser oder aber diverse Spüllösungen, zum Beispiel Gardolene^{®} D60, D86 oder D6800, verwendet.

Aluminium wird meistens kaltgewalzt entsprechend der Güte AlMg 1 G 18, zum Beispiel der Firma GARDOBOND^{®} Type AA 5005A oder aber der Güte AlMg0,4Si1,2 (Automobilspezifikation) der Firma GARDOBOND^{®} Type AA6016 verwendet. Hier wird die Oberfläche mit einer wässrigen Chromatierlösung mit enthaltener Chromsäure behandelt. Diese Bleche sind unter anderem erhältlich von der Firma Q-LAB^{®} als Type AL. Es kann aber auch verzinkter Stahl mit dieser Methode weiterbehandelt werden.

Unter dem Begriff "Glas" werden anorganische Silikatgläser zum Beispiel Borosilikatglas oder Kalknatronglas verstanden, die zum Beispiel als Getränkeflaschen dienen. Üblicherweise werden diese mit Etiketten versehen oder aber neuerdings auch direkt bedruckt.

Unter dem Begriff "formstabile Kunststoffe" werden folgende, jedoch nicht abschließende, Polymere verstanden: Acrylnitril-Butadien-Styrol (ABS), Polyamide (PA), Polymethylmethacrylat (PMMA), Polycarbonat (PC), Polyethylenterephthalat (PET), Polyethylen (PE), Polypropylen (PP), Polystyrol (PS), Polyetheretherketon PEEK), Polyvinylchlorid (PVC). Polypropylen (PP), Polyethylen (PE), Synthesekautschuk-Mixturen aus Ethylen- Propylen- Dien (EPDM).

Bei den 1K-Beschichtungssystemen enthält das filmbildende Polymer zum einen bevorzugt keine funktionellen Gruppen, da die Filmbildung durch physikalische Trocknung entsteht, oder aber Doppelbindungen, wenn die Trocknung durch eine Mischung aus oxidativer Härtung und physikalischer Trocknung erfolgt.

Vorzugsweise ist das filmbildende Polymer, welches rein physikalisch trocknet, ausgewählt aus der Gruppe der Acrylatpolymere, zum Beispiel von der Firma EVONIK^{®} mit dem Handelsnamen Degalan. Wird ein Polymer bevorzugt, welches zusätzlich oxidativ härtet, wird es typischerweise ausgewählt aus der Gruppe der Alkydbindemittel. Diese gehören chemisch zu den Polyestern und entstehen durch Kondensation von Alkoholen und mehrprotonigen Säuren unter Zugabe von Fettsäuren zur Modifizierung der Eigenschaften. Man unterscheidet diese nach Höhe des Ölgehaltes, welche das Trocknungsverhalten steuert. Bei einem Ölgehalt von unter 40% spricht man von einem kurzöligem Alkyd, welches lufttrocknet. Bei einem Ölgehalt zwischen 40 und 60% spricht man von einem mittelöligem Alkydharz, welches ofentrocknend ist. Bei einem Ölgehalt über 60% erhält man ein nichttrocknendes Alkyd.

Vorzugsweise wird in der erfindungsgemäßen Formulierung ein kurzöliges, lufttrocknendes Alkydharz zum Beispiel von der Firma WORLEEKyd^{®} verwendet. Die Polymerisation findet unter Einfluss von Sauerstoff über die Doppelbindungen der ungesättigten Fettsäureester statt. Besonders hervorzuheben ist hier die mehrfach ungesättigte α-Linolensäure. Zur Beschleunigung der Härtung werden üblicherweise Sikkative eingesetzt. Vorzugsweise handelt sich hierbei um Octoate. Zum Beispiel um Cobald oder aber Calciumoctoate. In der erfindungsgemäßen Formulierung wird ein Octa-Soligen^{®} Cobalt 6 und ein Octa-Soligen^{®} Calcium 10 in Kombination mit einem neuartigen Sikkativ Borchi^{®} OXY-Coat der Firma BORCHERS^{®} verwendet. Vorstellbar sind aber auch Cobaltoctoate mit den Handelsnamen Octa-Soligen^{®} Cobalt 10 oder Octa-Soligen^{®} Cobalt 12. Außerdem auch Manganoctoate unter dem Handelsnamen Octa-Soligen^{®} Manganese 10 oder aber auch Zirkoniumoctoate unter dem Handelsnamen Octa-Soligen^{®} Zirkonium 18 der Firma BORCHERS^{®}. Mangan (AKDRY Mn Octoate 6%) und Zirkoniumoctoat sind auch von der Firma AMERICAN ELEMENTS^{®} erhältlich. Calciumoctoate sind auch von der Firma PATCHEM^{®} LTD unter dem Handelsnamen Calcium Octoate 10% erhältlich. Des Weiteren können Sikkative auf Basis von Barium, Cer, Lithium, oder Strontium eingesetzt werden. Es stehen heutzutage auch moderne Trockenstoffe auf Basis von Metallseifen verschiedener Carbonsäuren zur Verfügung. Basierend auf der 2-Ethylhexansäure zum Beispiel von der Firma BORCHERS^{®} unter dem Handelsnamen Octa-Soligen^{®} 203.

Sollte die Trocknung zu schnell von statten gehen, werden sogenannte Hautverhinderungsmittel auf Basis von zum Beispiel Ketoximen, substituierten Phenolen oder aber Aldoximen zugegeben. Diese bilden mit den Sikkativen reversible Komplexe. Oxime sind zum Beispiel von der Firma BODO MÖLLER^{®} CHEMIE unter den Handelsnamen Dura^{®} MEKO oder Duroxim P oder aber von der Firma FISHER SCIENTIFIC^{®} unter dem Handelsnamen Alfa Aesar^{®} 2 Butanonoxim erhältlich.

Jedoch ist immer eine Verdünnung mit einem geeigneten organischen Lösungsmittel notwendig, um eine gute Verarbeitbarkeit zu gewährleisten. Vorzugsweise wird in der erfindungsgemäßen Formulierung Xylol verwendet. Vorstellbar ist auch die Verwendung von aliphatischen Kohlenwasserstoffen.

Bei den 2K-Beschichtungssystemen enthält das filmbildende Polymer bevorzugt funktionelle Gruppen, welche mit einem isocyanathaltigen Härter, einem aminhaltigen Härter oder mit einem Katalysator reaktiv sind.

Vorzugsweise ist das filmbildende Polymer ausgewählt aus der Gruppe der hydroxyfunktionellen Acrylatpolymere, Polyesterpolymere, Polyurethanpolymere und/oder Polyetherpolymere, Polyoxypropylenamine, aminofunktionellen Acrylat-Polymere oder Polyesterpolymere sowie Polycarbamate, welche mit einem isocyanathaltigen Härter reagieren.

Typischerweise besitzen solche Polymere reaktive Hydroxy-Gruppen. Besonders bevorzugt werden Polymere mit mehreren hydroxyfunktionellen Gruppen eingesetzt. Hydroxyfunktionelle Acrylate sind u.a. von der Firma Allnex^{®} unter den Handelsnamen MACRYNAL^{®} oder SETALUX^{®} erhältlich. Beispiele für hydroxyfunktionelle Polyester sind unter anderem kommerziell erhältlich unter dem Markennamen DESMOPHEN^{®} oder SETAL^{®}. Verwendbare und kommerziell erhältliche hydroxyfunktionelle Polyether sind u.a. erhältlich unter dem Markennamen TERATHANE^{®} oder POLYMEG^{®}.

Vorzugsweise weist die geprüfte erfindungsgemäße 2K-Beschichtung einen Härter auf, der ausgewählt ist aus der Gruppe der aliphatischen oder cycloaliphatischen Isocyanate.

Beispiele für isocyanathaltige Härter sind monomere Isocyanate, polymere Isocyanate und Isocyanat-Prepolymere. Polyisocyanate werden gegenüber monomeren Isocyanaten aufgrund ihrer geringeren Toxizität bevorzugt. Beispiele für Polyisocyanate sind Isocyanurate, Uretdione und Biurete basierend auf Diphenylmethan Diisocyanat (MDI), Toluol Diisocyanat (TDI), Hexamethylen Diisocyanate (HDI) and Isophoron Diisocyanat (IPDI). Beispiele für kommerziell erhältliche Produkte sind unter dem Markennamen DESMODUR^{®} von Covestro oder VESTANAT von Evonik Industries. Bekannte Produkte sind DESMODUR^{®} N3200, DESMODUR^{®} N3300, DESMODUR^{®} N3600 DESMODUR^{®} N75, DESMODUR^{®} XP2580, DESMODUR^{®} Z4470, DESMODUR^{®} XP2565 and DESMODUR^{®} VL von Covestro. Weitere Beispiele sind VESTANAT^{®} HAT 2500 LV, VESTANAT^{®} HB 2640 LV oder VESTANAT^{®} T 1890E von Evonik Industries. Beispiele für Isocyanat-Prepolymere sind DESMODUR^{®} E XP 2863, DESMODUR^{®} XP 2599 oder DESMODUR^{®} XP 2406 von Covestro. Weitere dem Fachmann bekannte Isocyanat-Prepolymere können eingesetzt werden.

Es ist vorstellbar, Katalysatoren zur Aushärtung einzusetzen. Folgende Katalysatoren, ausgewählt aus organischen Sn(IV)-, Sn(II)-, Zn-, Bi-Verbindungen oder tertiären Aminen, können eingesetzt werden.

Bevorzugt werden Katalysatoren ausgewählt aus der Gruppe der Organozinnkatalysatoren, Titanate oder Zirkonate, metallorganische Verbindungen des Aluminiums, Eisens, Calciums, Magnesiums, Zinks oder Bismuths, Lewis-Säuren oder organische Säuren/Basen, lineare oder zyklische Amidine, Guanidine oder Amine oder eine Mischung daraus eingesetzt.

Vorzugseise werden als Härtungs-Katalysatoren organische Zinnverbindungen, wie z.B. Dibutylzinndiacetylacetonat, Dibutylzinndiacetat, Dibutylzinndioctoat, oder Dioctylzinndilaurat, Dioctylzinndiacetylacetonat, Dioctylzinndiketanoat, Dioctylstannoxan, Dioctylzinnoxid, bevorzugt Dioctylzinndiacetylacetonat, Dioctylzinndilaurat, Dioctylzinndiketanoat, Dioctylstannoxan, Dioctylzinndicarboxylat, Dioctylzinnoxid, besonders bevorzugt Dioctylzinndicarboxylat und Dioctylzinndilaurat eingesetzt. Des Weiteren können auch Zinksalze wie Zinkoctoat, Zinkacetylacetonat und Zink-2-ethylcaproat, oder Tetraalkylammoniumverbindungen wie N,N,N-Trimethyl-N-2-hydroxypropyl-ammonium-hydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt ist Zinkoctoat. Weiter bevorzugt sind Bismutkatalysatoren, z.B. TIB Kat (TIB Mannheim) oder Borchi^{®}-Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc.. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren bevorzugt. Weiter bevorzugt sind Guanidin-Gruppen tragende organische und Silicium-organische Verbindungen. Selbstverständlich können auch Kombinationen mehrerer Katalysatoren eingesetzt werden. Darüber hinaus können auch photolatente Basen als Katalysatoren verwendet werden, wie sie in der WO 2005/100482 beschrieben sind.

Der Härtungskatalysator wird vorzugsweise in Mengen von 0,01 bis 5,0 Gew.-%, bevorzugt 0,05 bis 4,0 Gew.-% und besonders bevorzugt 0,1 bis 3 Gew.-% bezogen auf die Gesamtmasse der härtbaren Zusammensetzung eingesetzt.

Auch kann die Verwendung von Lösungsmitteln sinnvoll sein. Die Lösungsmittel können dabei beispielsweise der Erniedrigung der Viskosität des unvernetzten Bindemittels dienen oder das Aufziehen auf die Oberfläche begünstigen. Als Lösungsmittel kommen prinzipiell sämtliche Lösungsmittel sowie Lösemittelmischungen in Betracht. Die Wahl eines geeigneten Lösungsmittels kann dabei erfolgen aus der Gruppe der Alkane, Alkene, Alkine, Benzol und Aromaten mit aliphatischen und aromatischen Substituenten, Carbonsäureester, lineare und cyclische Ether und bei hohen Drücken auch Kohlenstoffdioxid, halogenierte aliphatische oder aromatische Kohlenwasserstoffe, Ketone oder Aldehyde, Lactone (γ-Butyrolacton), Lactame (z.B. N-Methyl-2-pyrrolidon), Nitrile, Nitroverbindungen, tertiäre Carbonsäureamide (Dimethylformamid), Harnstoffderivate wie Tetramethylharnstoff oder Dimethylpropylen-harnstoff (DMPU), Sulfoxide wie Dimethylsulfoxid (DMSO), Sulfone wie Sulfolan, Kohlensäureester wie Dimethylcarbonat oder Ethylencarbonat. Auch seien protische Lösungsmittel genannt wie Wasser, Methanol, Ethanol, n- und Isopropanol und andere Alkohole, primäre und sekundäre Amine, Carbonsäuren und deren Ester wie auch Anhydride, primäre und sekundäre Amide wie Formamid. Bevorzugt sind im Bereich der Coatinganwendungen akzeptierte Lösungsmittel wie Ether z.B. t-Butyl-methylether, Ester, wie z.B. Ethylacetat oder n-Butylacetat, tert-Butylacetat oder Diethylcarbonat sowie Alkohole, wie z.B. Ethanol und die verschiedenen Regioisomeren des Propanols und Butanols. Weiterhin sind bevorzugte Lösungsmittel aromatische und/oder aliphatische Lösemittel wie Benzol, Toluol oder Napthaschnitte.

Bei Bedarf können außerdem eine oder mehrere Substanzen zugefügt werden, ausgewählt aus der Gruppe umfassend Co-Vernetzer, Flammschutzmittel, Entlüfter, Härter, antimikrobielle und konservierende Stoffe, Farbstoffe, Färbemittel und Pigmente, Frostschutzmittel, Fungizide, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht.

UV-Stabilisatoren sind bevorzugt bekannte Produkte auf Basis gehinderter phenolischer Systeme oder Benzotriazole. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin^{®}-Stabilisatoren (BASF), wie z. B. Tinuvin^{®}-Stabilisatoren (BASF), beispielsweise Tinuvin^{®} 1130, Tinuvin^{®} 292 oder auch Tinuvin^{®} 400, bevorzugt Tinuvin^{®} 1130 in Kombination mit Tinuvin^{®} 292 eingesetzt werden. Ihre Einsatzmenge richtet sich nach dem Grad der erforderlichen Stabilisierung.

Für die Farbgebung bei Beschichtungen eignen sich Pigmente auf Basis von Titandioxid und andere Weißpigmente, Anorganischen Farbpigmenten, wie z.B. Eisenoxide, Chrompigmente, Ultramarinpigmente, Organische Farbpigmente wie Azopigmenten, Phthalocyaninpigmenten, Perylenpigmenten, Quinacridonpigmenten, darüber hinaus Ruße. Für die Verbesserung des Korrosionsschutzes kommen noch die typischen Korrosionsschutzpigmenten, wie z.B. Zinkphoshat zum Einsatz.

Füllstoffe sind bevorzugt gefällte oder gemahlene Kreide, anorganische Carbonate im allgemeinen, gefällte oder gemahlene Silikate, gefällte oder pyrogene Kieselsäuren, Glaspulver, Glashohlkugeln (sog. Bubbles), Metalloxide, wie z.B. TiOz, Al₂O₃, natürliche oder gefällte Bariumsulfate, Quarzmehle, Sand, Aluminiumtrihydrate, Talkum, Glimmer, Christobalitmehle, verstärkende Fasern, wie Glasfasern oder Kohlefasern, lang oder kurzfaserige Wollastonite, Kork, Ruß oder Graphit. Vorteilhaft können hydrophobierte Füllstoffe eingesetzt werden, da diese Produkte einen geringeren Wassereintrag aufweisen und die Lagerstabilität der Formulierungen verbessern.

Es ist auch vorstellbar, die erfindungsgemäßen Substanzen in UV-härtenden Formulierungen einzusetzen. Hier findet die Härtung durch radikalische Polymerisation statt.

Vorzugsweise sind die filmbildenden Polymere ausgewählt aus der Gruppe der Acrylate und Methacrylate. Es wird in den meisten Fällen eine Mischung aus zum Beispiel einem Polyetheracrylat der Firma BASF mit dem Handelsnamen Laromer LR 8945^{®} und einem Polyesteracrylat der Firma BASF^{®} mit dem Handelsnamen Laromer LR8799 oder Laromer LR8800 verwendet.

Als reaktive Lösungsmittel kommen Hexadioldiacrylat oder Trimethylolpropantriacrylat in Frage.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### I. Herstellungsbeispiele

### Allgemeine Methoden

### Gel-Permeations-Chromatographie (GPC):

GPC-Messungen zur Bestimmung der Polydispersität (M_{w}/Mₙ), der gewichtsmittleren Molmasse (M_{w}) und der zahlenmittleren Molmasse (Mₙ) wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Bestimmung des Gehalts an Epoxidgruppen im Polybutadien (Epoxidgehalt, Epoxidierungsgrad):

Die Bestimmung des Gehalts an Epoxidgruppen erfolgte mit Hilfe der ¹³C-NMR-Spektroskopie. Verwendet wurde ein NMR-Spektrometer vom Typ Bruker Avance 400. Die Proben wurden dazu in Deuterochloroform gelöst. Der Epoxidgehalt ist definiert als der Anteil an epoxidierten Butadieneinheiten in mol-% bezogen auf die Gesamtheit aller in der Probe enthaltenen Wiederholungseinheiten. Dies entspricht der Anzahl der Epoxidgruppen des epoxidierten Polybutadiens dividiert durch die Anzahl der Doppelbindungen des eingesetzten Polybutadiens.

### Bestimmung der Säurezahl:

Die Säurezahlbestimmung wurde nach einem Titrationsverfahren in Anlehnung an die DIN EN ISO 2114 durchgeführt.

### Herstellung des erfindungsgemäßen Haftvermittlers

Angelehnt an die noch unveröffentlichte europäische Patentanmeldung EP 19212066.5 bzw. PCT/EP2020/083013 1.1, wurden die Schritte a) - c) durchgeführt. Exemplarisch wird jeweils das erste Beispiel bzgl. der Einwaage der Komponente beschrieben. Die eingesetzten Einwaagen und Parameter der Zwichenprodukte und Entprodukte sind den jeweiligen Tabellen zu entnehmen.

### Schritt a) Herstellung epoxidierter Polybutadiene

Zur Herstellung eines epoxidierten Polybutadiens wurde ein Polybutadien der Formel (1) mit der Struktur x=1%, y=24% und z=75% eingesetzt (Polyvest^{®} 110).

### Exemplarisch für Beispiel A1:

Es wurde in einem 5L-Vielhalsglaskolben unter einer Stickstoffatmosphäre 1500 g Polyvest^{®} 110 und 81,0 g konz. Ameisensäure in 1500 g Chloroform bei Raumtemperatur vorgelegt. Anschließend wurden 300 g 30%-ige HzOz-Lösung (30 Gew.-% HzOz bezogen auf die Gesamtmasse der wässrigen Lösung) langsam zugetropft und die Lösung dann für 5,5 Stunden auf 50 °C erhitzt. Nach Ende der Reaktion wurde auf Raumtemperatur abgekühlt, die organische Phase abgetrennt und diese noch viermal mit dest. H₂O gewaschen. Überschüssiges Chloroform und restliches Wasser wurden abdestilliert. Es wurden 1440 g des Produktes erhalten, welches mit 1000 ppm Irganox^{®} 1135 versetzt und unter Stickstoff gelagert wurde.

Die Auswertung mittels ¹³C-NMR ergab einen Epoxidierungsgrad von ca. 8,5% der Doppelbindungen. M_{w}=4597 g/mol ; Mₙ=1999 g/mol ; M_{w}/Mₙ = 2,3

Für die anderen Beispiele A2 - A5 können die Einwaage, Reaktionsbedingungen und Auswertungen der Tabelle 1 entnehmen. Zur besseren Lesart wurde die Bezeichnung der Beispiele A1 - A5 auch für Tabellen 2 und 3 beibehalten.

**Tabelle 1: Epoxidiertes Polybutadien**

| | **Polybutadien [g]** | **konz. Ameisensäure [g]** | **CHCl₃ [g]** | **30% H₂O₂**-**Lsg. [g]** | **t [h]** | **Mₙ [g/mol]** | **M_{w} [g/mol]** | **M_{w}/Mₙ** | **Epoxidierungsgrad [%]** | **Ausbeute [g]** |
|---|---|---|---|---|---|---|---|---|---|---|
| **A1** | 1500 | 81,0 | 1500 | 300 | 5,5 | 1999 | 4597 | 2,3 | 8,5 | 1440 |
| **A2** | 1500 | 81,0 | 1500 | 300 | 7 | 2001 | 4620 | 2,4 | 8,5 | 1425 |
| **A3** | 800 | 43,2 | 800 | 160 | 10 | 1982 | 4757 | 2,4 | 8,6 | 771 |
| **A4** | 800 | 43,2 | 800 | 160 | 9,5 | 1992 | 4582 | 2,3 | 8,3 | 767 10 |
| **A5** | 800 | 43,2 | 800 | 160 | 10 | 2011 | 4625 | 2,3 | 8,4 | 756 |

### Schritt b) Herstellung hydroxyfunktioneller Polybutadiene

Zur Herstellung eines hydroxylierten Polybutadiens wurde das epoxidierte Polybutadien A1 aus Schritt a) eingesetzt. Der Hydroxylierungsgrad ist dabei die Anzahl der OH-Gruppen des OH-funktionellen Polybutadiens dividiert durch die Anzahl der Doppelbindungen des in Schritt a) eingesetzten Polybutadiens. Zur Herstellung wurden in einem 5 L-Vierhalskolben unter einer Stickstoffatmosphäre 1400 g des epoxidierten Polybutadiens in 1400 g iso-Butanol vorgelegt und unter Rühren mit 80wppm Trifluormethansulfonsäure (bezogen auf Masse epoxidiertes Polybutadien). Anschließend wurde auf 70 °C erhitzt und das Gemisch für 6 Stunden bei dieser Temperatur gerührt. Während der Reaktion klart das Reaktionsgemisch auf. Nach beendeter Reaktion wurde auf Raumtempertaur abgekühlt und die Lösung durch Zugabe von 21,4 g ges. NaHCO₃-Lsg. neutralisiert. Es wurde auf 115 °C erhitzt und überschüssiges Wasser sowie der überschüssige Alkohol wurden i.Vak. abdestilliert. Der durch Destillation zurück gewonnene und ggf. getrocknete Alkohol kann bei Folgesynthesen wieder eingesetzt werden. Die Trocknung des abdest. iso-Butanols kann z.B. destillativ oder durch Zusatz von Trocknungsmitteln wie z.B. Molsieben geschehen. Es wurden 1455 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 8,5% ergibt.
M_{w}=6228 g/mol ; Mₙ=2196 g/mol ; M_{w}/Mₙ = 2,8

Analog wurde der Schritt auch für die anderen Beispiele durchgeführt, siehe Tabelle 2.

**Tabelle 2: hydroxyfunktionelles Polybutadien**

| | **Epoxidiertes Polybutadien aus Tabelle 1 [g]** | **iso-Butanol [g]** | **ges. NaHCO₃**-**Lsg. [g]** | **t [h]** | **Mₙ [g/mol]** | **M_{w} [g/mol]** | **M_{w}/Mₙ** | **Hydroxylierungs grad [%]** | **Ausbeute [g]** |
|---|---|---|---|---|---|---|---|---|---|
| **A1** | 1400 | 1400 | 21,4 | 6 | 2196 | 6228 | 2,8 | 8,5 | 1455 |
| **A2** | 1400 | 1400 | 21,4 | 4,5 | 2203 | 6080 | 2,8 | 8,5 | 1467 |
| **A3** | 725 | 725 | 11,1 | 4,5 | 2331 | 8534 | 3,7 | 8,6 | 747 |
| **A4** | 720 | 720 | 11,0 | 5 | 2325 | 7551 | 3,2 | 8,3 | 752 |
| **A5** | 700 | 700 | 10,7 | 6 | 2313 | 7898 | 3,4 | 8,4 | 726 |

### Schritt c) Herstellung alkoxylierter Polybutadiene

In einem 3 Liter Autoklaven wurden 334,0 g des hydroxyfunktionellen Polybutadiens A2 aus Schritt b) und 19,2 g 30%-iger Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Ein Gemisch aus 332 g Ethylenoxid (EO) sowie 306 g Propylenoxid (PO) wurden kontinuierlich und unter Kühlen in 9 h bei 115 °C und max. 3,5 bar Reaktorinnendruck (absolut) zudosiert. An die 30 minütige Nachreaktion bei 115 °C schloss sich die Entgasung an. Flüchtige Anteile wie restliches Ethylenoxid und Propylenoxid wurden im Vakuum abdestilliert. Das Produkt wurde auf 95 °C abgekühlt, mit 30%-iger H₃PO₄ auf eine Säurezahl von 0,1 mg KOH/g neutralisiert und mit 1000 ppm Irganox^{®} 1135 versetzt. Wasserwurde in einer Vakuumdestillation entfernt und ausgefallene Salze abfiltriert. Es wurden 1076 g des mittelviskosen und orange-farbenen, klaren alkoxylierten Polybutadiens isoliert und unter Stickstoff gelagert.
M_{w}=13.481 g/mol ; Mₙ=3209 g/mol ; M_{w}/Mₙ = 4,2

Analog wurden weitere Beispiele und Vergleichsbeispiel gemäß Tabelle 3 mit den aufgeführten Einwaagen und Reaktionsbedingungen durchgeführt. Die Alkoxylierungsmodifikationen sind aus der Spalte "Dosageprofil" ersichtlich.

**Tabelle 3: alkoxyliertes Polybutadien**

| | **Hyroxyliertes Polubutadien [g] aus Tabelle 2** | **Dosageprofil** | **t [h]** | **Kat. [g]** | **Mₙ [g/mol]** | **M_{w} [g/mol]** | **M_{w}/Mₙ** | **SZ [mg KOH/g]** | **Ausbeute [g]** | **Aggregat-zustand** |
|---|---|---|---|---|---|---|---|---|---|---|
| **A1** bzw. VGA1 | 532 des A1₎ | 586g PO | 8 | 30,3 | 3233 | 13.650 | 4,5 | 0,1 | 1062 | flüssig |
| **A2** bzw. VGA2 | 555 des A2 | 332 g EO / 306 g PO | 6,5 | 31,6 | 3209 | 13.481 | 4,2 | 0,1 | 1013 | flüssig |
| **A3** | 455 des A3 | 752 g PO | 9 | 25,9 | 2938 | 17.391 | 5,92 | 0,1 | 1134 | flüssig |
| **A4** bzw. VGA4 | 627 des A4 | 520 g PO / 920 g EO | 10 | 35,8 | 4373 | 18.940 | 4,3 | 0,1 | 7269 | flüssig |
| **A5** | 303 des A5 | 835 g PO | 9 | 17,3 | 2999 | 20.638 | 6,88 | 0,1 | 1052 | flüssig |

### Schritt d) Herstellung der erfindungsgemäßen Polyester-Polyethermodifizierten Polybutadiene mittels Veresterung des alkoxylierten Polybutadiens

### Exemplarisch für Beispiel PPA1:

In einem 500mL Vierhalskolben wurden 120 g des alkoxylierten Polybutadiens aus Schritt c), 40 g ε-Caprolactons (Fa. Aldrich) und 40 g δ-Valerolacton (Fa. Aldrich) unter Stickstoff vorgelegt und auf 40°C geheizt. Nach der Zugabe von 0,95 g Tyzor^{®} NBZ (0,5 Gew.-% bezogen auf Gesamtmasse der Reaktionsmischung) wurde auf 160°C geheizt und 4 h bei Temperatur gerührt. Nach Abkühlen wurden 188g eines orangebraunen pastösen Produkts isoliert.

Weitere Beispiele wurden mit den in Tabelle 4 aufgeführten Einwaagen (Gew.-%) und Reaktionsbedingungen durchgeführt.

**Tabelle 4: Erfindungsgemäße Verbindung**

| **Erfindungsgemäße Polyester-Polyethermodifizie rte Polybutadien** | **Alkoxyliertes Polybutadien [g] aus Tabelle 3** | **Alkoxyliertes Polybutadien/ ε-Caprolacton/ δ-Valerolacton (Gew.-%)** | **Mn [g/mol]** | **Mw [g/mol]** | **Mw/Mn** | **Ausbeute [g]** | **Aggregatszustand** |
|---|---|---|---|---|---|---|---|
| PPA1 | A1 | 60/20/20 | 2937 | 14.032 | 4,78 | 198 | flüssig |
| PPA2 | A2 | 60 / 40 / 0 | 2855 | 14.072 | 4,93 | 198 | fest |
| PPA3 | A3 | 80 / 20 / 0 | 2882 | 16.556 | 5,75 | 188 | Flüssig |
| PPA4 | A4 | 80 / 20 / 0 | 3725 | 18.839 | 5,06 | 188 | pastös |
| PPA5.1 | A5 | 80 / 20 / 0 | 3034 | 17.914 | 5,90 | 188 | Flüssig |
| PPA5.2 | A5 | 60 / 40 / 0 | 3334 | 17.730 | 5,32 | 198 | pastös |
| PPA5.3 | A5 | 60/20/20 | 2751 | 17.054 | 6.20 | 198 | flüssig |

### II. Anwendungstechnische Beispiele

### Allgemeine Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Geräte

Speedmixer, Firma Hauschild Engineering Modell FAC 150.1 FVZ
Trockenofen, Firma Binder, Gerätetyp FDL 115 E2
Dispermat, Firma Getzmann Gerätetyp CV2-SIP
Gitterschnitttester, DIN EN ISO 2409, Gitterschnittschablonen Set CCP
Cuttermesser, Firma HEYCO Modell 01664000000
Klebeband, Firma TESA 4651
Laborwaage, Sartorius MSE 6202 S 100 DO
Spiralrakel, Firma BYK Gardner, 100µm

### Methoden

### Haftungsprüfung

Für eine optimale Prüfung der Haftleistung von Haftvermittlern hat sich bewährt, zunächst eine Vorprüfung mittels des Andreas-Cut Tests durchzuführen. Wird eine Probe mit einer 1 (keinerlei Abplatzungen) bewertet, kommt sie dann zur Gitterschnittprüfung nach DIN EN ISO 2409. Somit kann Zeit und Aufwand minimiert werden. Manchmal ist es auch ausreichend, nur den Wert aus der Andreas Cut Text heranzuziehen.

### a) Vorprüfung mit dem Andreas Cut Test

Mit einem Cuttermesser werden entlang eines Lineals zwei Ritze mit 90° zueinander und einer jeweiligen Länge von 3 bis 4 cm in die Beschichtung bis zum Untergrund durchgeschnitten. Bei Kunststoffsubstraten ist darauf zu achten, das Substrat möglichst nicht mitzuschneiden. Anschließend wird die angeritzte Stelle mit einem TESA Klebeband 4651 abgeklebt, festgedrückt und dann abgezogen. Es wird wie folgt bewertet:

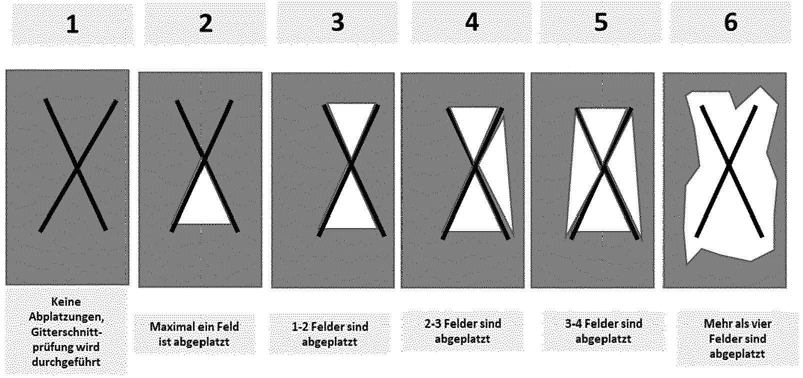

### b) Gitterschnittprüfung wird gemäß DIN EN ISO 2409 durchgeführt.

**Die Kompatibilitätsprüfung** wird mittels einer visuellen Beurteilung des Lackfilms anhand der Skala (Tabelle 5) ermittelt.

**Tabelle 5: Skala der visuellen Beurteilung des Lackfilms:**

| | **Aussehen / Merkmale** |
|---|---|
| 1 | klar |
| 2 | Leicht trüb |
| 3 | Leicht trüb und oder Stippen |
| 4 | Trüb, Stippen und/oder Pinholes |
| 5 | Sehr trüb und/oder Krater, Stippen, Pinholes, Benetzungsstörung |

### Materialien

**Tabelle 6: Rohstoffe für die Lackformulierungen**

| **Handelsname** | **Chemische Beschreibung** | **Verwendungszweck** | **Unternehmen** |
|---|---|---|---|
| Degalan^{®} 64/12 | Lufttrocknendes lineares Polyacrylat | Filmbildendes Polymer | Fa. Evonik |
| Macrynal^{®} SM 510/60 LG | Hydroxyfunktionelles Polyacrylat | Filmbildendes Polymer | Fa. Allnes |
| Setal^{®} 1603 | Hydroxylgruppenhaltiger Polyester | Filmbildendes Polymer | Fa. Allnex |
| Desmodur^{®} N 3200 | Polyisocyanat | Härter | Fa. Covestro |
| Desmodur^{®} N 3600 | Polyisocyanat | Härter | Fa. Covestro |
| Butylacetat | Butylacetat | Lösemittel | Fa. Sigma-Aldrich |
| Butyldiglocolacetat | Butyldiglocolacetat | Lösemittel | |
| Solvesso 100 | Aromatischer Kohlenwasserstoff im Destillationsbereich 166°C-181°C | Lösemittel | Brenntag |
| Hydrosol A 170 | Aromatischer Kohlenwasserstoff | Lösemittel | DHC Solvent Chemie GmbH |
| Xylol | Isomeren Gemisch aromatischer Kohlenwasserstoffe | Lösemittel | Fa. Sigma-Aldrich |
| Methoxypropylacetat | Carbonsäureester | Lösemittel | Fa. Sigma-Aldrich |
| TIB KAT^{®} 318 | Dioctylzinn Dicarboxylat | Katalysator | TIB Chemicals AG |
| TIB KAT^{®} 218 | Dibutylzinndilaurat | Katalysator | TIB Chemicals AG |
| TEGO^{®} Flow 300 | Acrylathaltiges Polymer | Verlaufsadditiv | Fa. Evonik |
| TEGO^{®} Airex 990 | Entschäumer / Entlüfter | Entschäumer / Entlüfter | Fa. Evonik |

### Herstellung der Lackformulierungen

Für die anwendungstechnischen Prüfungen wurden zunächst drei Lackformulierungen E1 bis E3 entsprechend den Bestandteilen und Mengenangaben aus Tabelle 7 hergestellt.

### Lackformulierung E1:

Die Bestandteile (P1+P8) mit den in Tabelle 3 aufgeführten Mengen, wurden auf 2kg hochgerechnet und in einer Blechdose mit einem 2,5L Fassungsvolumen gewogen. Die Mischung wurde unter dem Dispermat der Firma Getzmann, Gerätetyp CV2-SIP, einer Dispergierscheibe mit einem Durchmesser von 8cm und einer Umdrehungsgeschwindigkeit von 500upm für 20 Minuten gerührt.

### Lackformulierung E2:

Die Bestandteile (P2+P5 bis P8, P11+P12 und P14+P15), ohne den Härter (P5), mit den in Tabelle 6 aufgeführten Mengen wurden auf 2 kg hochgerechnet. Zunächst wurde P2 in einer Blechdose mit einem 2,5L Fassungsvolumen gewogen. Die Positionen P5 bis P8 und P11+P12, P14+P15 wurden nacheinander unter Rühren zugegeben. Die Mischung wurde unter dem Dispermat der Firma Getzmann, Gerätetyp CV2-SIP, einer Dispergierscheibe mit einem Durchmesser von 8cm und einer Umdrehungsgeschwindigkeit von 500upm hergestellt und nach Zugabe der letzten Position für weitere 20 Minuten gerührt. Es wurde darauf zu achten, dass keine Schlieren mehr zu sehen waren.

### Lackformulierung E3:

Für die Lackformulierung E2 wurden alle Bestandteile (P3+P4, P7 und P9+P10, P13+P15) außer dem Härter (P4) mit den in Tabelle 3 aufgeführten Mengen auf 2kg hochgerechnet und in einer Blechdose mit einem 2,5L Fassungsvolumen gewogen. Die Mischung wurde mit einem Dispermat der Firma Getzmann, Gerätetyp CV2-SIP mit einer Dispergierscheibe mit einem Durchmesser von 8cm und einer Umdrehungsgeschwindigkeit von 500upm gerührt. Zunächst wird das Bindemittel (P3) vorgelegt, alle weiteren Bestandteile (P7 und P9+P10, P13+P15) wurden unter Rühren zugegeben. Nach Zugabe der letzten Position wurde für weitere 20 Minuten gerührt.

### 1) Vorbereitung der Lackformulierungen für die anwendungstechnischen Prüfungen

Die erfindungsgemäßen Verbindungen PPA1 - PPA5.3, Vergleichsbeispiele VGA1, VGA2, VGA4 und PV 110 (Polyvest^{®} 110) wurden zu je 5 Gew.-% bezogen auf den jeweiligen Festkörpergehalt (für E1 = 30%; E2 = 57,5%; E3 = 56,3%) zugegeben. Als Nullreferenz diente die Lackformulierung E1 bis E3 ohne Zusatz des Polybutadiens. VGA1, VGA2, VGA4 sind alkoxylierte Polybutadiene ohne nachträgliche Veresterung.

Zur Einarbeitung der erfindungsgemäßen Verbindungen PPA1 - PPA5.3, Vergleichsbeispiele VGA1, VGA2, VGA4 und PV 110 (Polyvest^{®} 110) wurden jeweils 20g der Lackformulierungen E1 bis E3 (bei den 2K Systemen inklusive Härter) in eine 50 ml PP Schraubdose (Dürrmann GmbH & Co KG, 85664 Hohenlinden) gewogen und mittels Speedmixers für zwei Minuten bei 2000 Umdrehungen pro Minute (Fa. Hauschild Engineering, Typ DAC 150 FVZ) gemischt. Die vorbereiteten Lackformulierungen wurden dann mit einem 100µm Spiralrakel auf verschiedenen Substraten appliziert, so dass im getrockneten Zustand eine Trockenschichtdicke von ca. 40 µm erzielt wurde. E1 wurde auf Glas appliziert. E2 wurde auf Glas, ABS und Aluminium appliziert. E3 wurde auf Stahl A36 Q-Panels appliziert. Die applizierten Substrate wurden bei Raumtemperatur (23°C) über Nacht und anschließend 2 Tage bei 60°C getrocknet bzw. gehärtet.

**Tabelle 7: Zusammensetzung von jeweils 100 g der Lackformulierungen**

| **Position P.** | **Rohstoffe [g]** | **E1** | **E2** | **E3** |
|---|---|---|---|---|
| 1 | Degalan^{®} 64/12 | 30,0 | | |
| 2 | Macrynal^{®} SM 510/60 LG | | 60,1 | |
| 3 | Setal^{®} 1603 | | | 55,7 |
| 4 | Desmodur^{®} N 3600 | | | 30,6 |
| 5 | Desmodur^{®} N 3200 | | 21,3 | |
| 6 | Methoxypropylacetat | | 4,6 | |
| 7 | Butylacetat | 70 | 5,5 | 11,1 |
| 8 | Solvesso 100 | | 3,4 | |
| 9 | Hydrosol A 170 | | | 1,1 |
| 10 | Butyldiglykolacetat | | | 1,1 |
| 11 | Xylol | | 4,2 | |
| 12 | TIB KAT^{®} 318 | | 0,3 | |
| 13 | TIB KAT^{®} 218 | | | 0,3 |
| 14 | TEGO^{®} Flow 300 | | 0,5 | |
| 15 | TEGO^{®} Airex 990 | | 0,1 | 0,1 |

Die Ergebnisse sind aus den nachfolgenden Tabellen zu entnehmen.

**Tabelle 8: Lackformulierung E1 auf Glas**

| **Produkte** | **Chemische Modifikation** | | **Haftung** | **Kompatibilität** |
|---|---|---|---|---|
| | Dosageprofil | | Andreas Cut / Gitterschnitt | |
| | PO (Masse) | Alkoxyliertes Polybutadien/ ε-Caprolacton/ δ-Valerolacton (Gew.-%) | | |
| E1 | | | 5/- | 1 |
| PV 110 | | | 1 / GT5 | 5 |
| PPA5.1 | 835g | 80/20/0 | 1 / GT5 | 1 |
| PPA5.2 | 835g | 60 / 40 / 0 | 1 / GT5 | 1 |
| PPA5.3 | 835g | 60 / 20 / 20 | 1 / GT5 | 1 |

Die Lackformulierung E1 als Nullreferenz zeigte wie erwartet keine Haftung auf Glas. Vergleichsbeispiel PV 110 zeigte eine vergleichbare Haftung, jedoch war der Lackfilm trüb und dieser wies Stippen und/oder Pinholes auf.

Die Lackformulierungen mit den erfindungsgemäßen Polyester-Poyethermodifizierten Polybutadienen zeigten ebenso eine gute Haftung auf Glas auf und zeitgleich sehr gute Verträglichkeit.

**Tabelle 9: Lackformulierung E2 auf Glas**

| **Produkte** | **Chemische Modifikation** | | **Haftung** | **Kompatibilität** |
|---|---|---|---|---|
| | Dosageprofil | | Andreas Cut / Gitterschnitt | |
| | EO/PO (Masse) aus Tabelle 3 entnommen | Alkoxyliertes Polybutadien/ ε-Caprolacton/ δ-Valerolacton (Gew.-%) | | |
| E2 | | | 6 | 1 |
| PV 110 | | | 6 | 4 |
| PPA1 | 0 / 586g | 60 / 20 / 20 | 1 / GT0 | 3 |
| VGA2 | 332g / 306g | | 2 | 1 |
| PPA2 | 332g / 306g | 60 / 40 / 0 | 1 / GT0 | 2 |
| PPA3 | 0 / 752g | 80 / 20 / 0 | 1 / GT0 | 4 |
| PPA5.2 | 0 / 835g | 60 / 40 / 0 | 1 / GT0 | 3 |
| PPA5.3 | 0 / 835g | 60 / 20 / 20 | 1 / GT0 | 3 |

Die erfindungsgemäßen Lackformulierungen E2 auf Glas zeigten eine bessere Haftung als die bei den Vergleichsbeispielen. Die Verträglichkeit sind zumindest besser als die des PV110. Die Lackformulierung mit dem nicht veresterten polyethermodifizierten Polybutadien haftete nicht so gut auf Glas wie die der PPA2.

**Tabelle 10: Lackformulierung E2 auf ABS**

| **Produkte** | **Chemische Modifikation** | | **Haftung** | **Kompatibilität** |
|---|---|---|---|---|
| | Dosageprofil | | Andreas Cut / Gitterschnitt | |
| | EO/PO (Masse) aus Tabelle 3 entnommen | Alkoxyliertes Polybutadien/ ε-Caprolacton/ δ-Valerolacton (Gew.-%) | | |
| E2 | | | 6 | 1 |
| PV 110 | | | 6 | 4 |
| PPA1 | 0 / 586g | 60 / 20 / 20 | 2 | 3 |
| VGA2 | 332g / 306g | | 4 | 1 |
| PPA2 | 332g / 306g | 60 / 40 / 0 | 1 / GT0 | 2 |
| PPA5.1 | 0 / 835g | 80 / 20 / 0 | 1 / GT0 | 3 |
| PPA5.2 | 0 / 835g | 60 / 40 / 0 | 1 / GT0 | 3 |
| PPA5.3 | 0 / 835g | 60 / 20 / 20 | 1 / GT0 | 3 |

Die Haftung der erfindungsgemäßen Lackformulierungen zeigten auf ABS durchgehend eine sehr gute Haftung. Gegenüber dem bekannten PV110 sind sie auch verträglicher.

**Tabelle 11: Lackformulierung E2 auf Aluminium A36 Q-Panel**

| **Produkte** | **Chemische Modifikation** | | **Haftung** | **Kompatibilität** |
|---|---|---|---|---|
| | Dosageprofil | | Andreas Cut / Gitterschnitt | |
| | EO/PO (Masse) aus Tabelle 3 entnommen | Alkoxyliertes Polybutadien/ ε-Caprolacton/ δ-Valerolacton (Gew.-%) | | |
| E2 | | | 6 | 1 |
| PV 110 | | | 5 | 4 |
| VGA1 | 0 / 586g | | 5 | 2 |
| PPA1 | 0 / 586g | 60 / 20 / 20 | 1 / GT0 | 3 |
| VGA2 | 332g / 306g | | 3 | 1 |
| PPA2 | 332g / 306g | 60/40/0 | 1 / GT0 | 2 |
| VGA4 | 520g / 920g | | 3 | 1 |
| PPA4 | 520g / 920g | 80 / 20 / 0 | 1 / GT0 | 1 |
| PPA5.1 | 0 / 835g | 80 / 20 / 0 | 1 / GT0 | 3 |
| PPA5.2 | 0 / 835g | 60 / 40 / 0 | 1 / GT0 | 3 |
| PPA5.3 | 0 / 835g | 60 / 20 / 20 | 1 / GT0 | 3 |

Auch hier sind die erfindungsgemäßen Lackformulierungen in ihrer Haftung dem bekannten PV110 und den nicht veresterten polyethermodifizierten Polybutadienen überlegen.

**Tabelle 12: Lackformulierung E3 auf Stahl S36 Q-Panel**

| **Produkte** | **Chemische Modifikation** | | **Haftung** | **Kompatibilität** |
|---|---|---|---|---|
| | Dosageprofil | | Andreas Cut / Gitterschnitt | |
| | EO/PO (Masse) aus Tabelle 3 entnommen | Alkoxyliertes Polybutadien/ ε-Caprolacton/ δ-Valerolacton (Gew.-%) | | |
| E3 | | | 5 | 1 |
| PV 110 | | | 5 | 5 |
| VGA1 | 0 / 586g | | 3 | 3 |
| PPA1 | 0 / 586g | 60 / 20 / 20 | 1 / GT5 | 1 |
| VGA5 | 0 / 835g | | 1 / GT3 | 4 |
| PPA5.2 | 0 / 835g | 60 / 40 / 0 | 1 / GT5 | 1 |

Hier zeigten die erfindungsgemäßen Lackformulierungen E3 auf Stahl sowohl in ihrer Haftungseigenschaft als in ihrer Kompatibilität ihre Überlegenheit gegenüber den unveresterten polyethermodifizierten Polybutadienen und dem bekannten PV 110.

## Patentansprüche

1. Verbindungen auf Basis von polyethermodifiziertem Polybutadien, wobei das polyethermodifizierte Polybutadien Wiederholungseinheiten ausgewählt aus der Gruppe bestehend aus den zweibindigen Resten 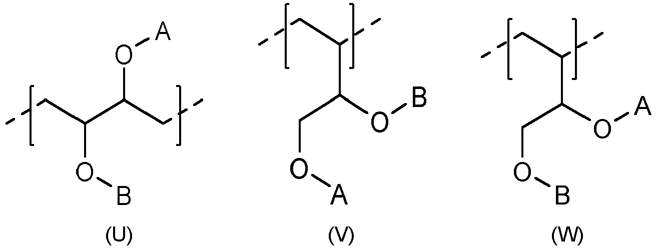 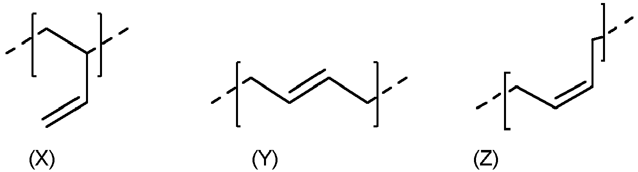 umfasst;
wobei
A jeweils unabhängig voneinander ein einbindiger organischer Rest oder ein Wasserstoffrest ist,
bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;
B jeweils unabhängig voneinander ausgewählt ist aus der Gruppe bestehend aus Resten der Formel (4a), 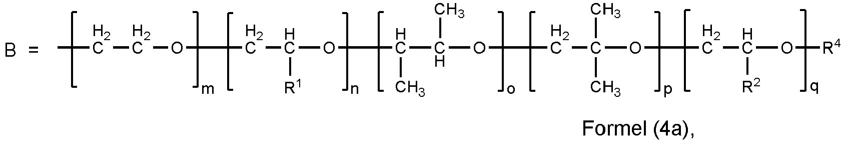 bevorzugt jeweils unabhängig voneinander ausgewählt ist aus der Gruppe bestehend aus Resten der Formel (4b), 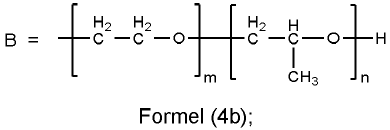
R¹ jeweils unabhängig voneinander ausgewählt ist aus der Gruppe bestehend aus einbindigen Kohlenwasserstoffresten mit 1 bis 16 Kohlenstoffatomen,
bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;
R² ein Rest der Formel -CH₂-O-R³ ist;
R³ jeweils unabhängig voneinander ausgewählt ist aus der Gruppe bestehend aus einbindigen Kohlenwasserstoffresten mit 3 bis 18 Kohlenstoffatomen;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
besonders bevorzugt ein tert-Butylphenylrest oder ein o-Kresylrest ist;
R⁴ Wasserstoff
und
m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
und jede Permutation der Wiederholungseinheiten (U), (V), (W), (X), (Y) und (Z) sowie der Wiederholungseinheiten im Rest B mitumfasst ist, mit der Maßgabe, dass die Summe aller Wiederholungseinheiten (U), (V) und (W) dividiert durch die Summe aller Wiederholungseinheiten (U), (V), (W), (X), (Y) und (Z) von >0 % ist, **dadurch gekennzeichnet, dass**
der Rest B mindestens eine Estergruppe aufweist.

2. Verbindung nach Anspruch 1, **dadurch gekennzeichnet, dass** die Estergruppe durch Umsetzung der Reste B mit Verbindungen (I) ausgewählt aus der Gruppe bestehend aus cyclischen Anhydriden, Lactonen, Di-Lactiden oder cyclischen Carbonaten als Monomere oder Comonomere gebildet wird, wobei die Verbindung Wiederholungseinheiten ausgewählt aus der Gruppe bestehend aus den Resten 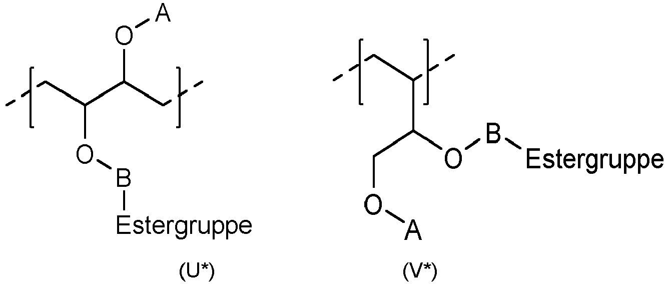 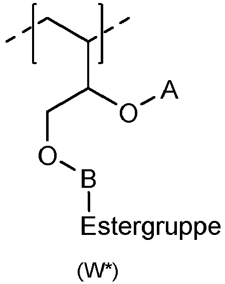 umfasst.

3. Verbindung nach der einem der vorgenannten Ansprüche, **dadurch gekennzeichnet, dass** cyclischen Anhydride, rein oder in beliebigen Mischungen, ausgewählt sind aus der Gruppe bestehend aus gesättigten, ungesättigten oder aromatischen cyclischen Dicarbonsäureanhydriden, bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid.

4. Verbindung nach einem der vorgenannten Ansprüche, **dadurch gekennzeichnet, dass** Lactone, rein oder in beliebigen Mischungen, ausgewählt sind aus der Gruppe bestehend aus Valerolactone, Caprolactone und Butyrolactone, die unsubstituiert oder mit organischen Resten versehen, bevorzugt Methylgruppen, substituiert sein können, vorzugsweise ε-Caprolacton oder δ-Valerolacton.

5. Verbindung nach einem der vorgenannten Ansprüche, **dadurch gekennzeichnet, dass** die Summe aller Wiederholungseinheiten (U), (V) und (W) dividiert durch die Summe aller Wiederholungseinheiten (U), (V), (W), (X), (Y) und (Z) von >0 % bis 70 %, bevorzugt 1 % bis 50 %, weiter bevorzugt von 2 % bis 40 %, noch weiter bevorzugt von 3 % bis 30 %, besonders bevorzugt von 4 % bis 20 % beträgt.

6. Verbindung nach einem der vorgenannten Ansprüche, **dadurch gekennzeichnet, dass** die zahlenmittlere Molmasse Mₙ des Polybutadienteils, bestimmt nach der in der Beschreibung angegebenen Methode, von 200 g/mol bis 20000 g/mol, bevorzugt von 500 g/mol bis 10000 g/mol, besonders bevorzugt von 700 g/mol bis 5000 g/mol beträgt.

7. Verbindung nach einem der vorgenannten Ansprüche, **dadurch gekennzeichnet, dass** 0 % bis 80 %, bevorzugt 0 % bis 30 %, besonders bevorzugt 0 % bis 10 %, ganz besonders bevorzugt 0 % bis 5 % der enthaltenen Doppelbindungen 1,2-Vinyl-Doppelbindungen sind und 20 % bis 100 %, bevorzugt 70 % bis 100 %, besonders bevorzugt 90 % bis 100 %, ganz besonders bevorzugt 95 % bis 100 % der enthaltenden Doppelbindungen 1,4-Doppelbindungen sind.

8. Verbindung nach einem der vorgenannten Ansprüche, **dadurch gekennzeichnet, dass** die mittlere Molmasse des Rests B, bestimmt nach der in der Beschreibung angegebenen Methode, von 100 g/mol bis 20000 g/mol, bevorzugt von 200 g/mol bis 15000 g/mol, besonders bevorzugt von 400 g/mol bis 10000 g/mol beträgt.

9. Verfahren zur Herstellung von einem oder mehreren polyethermodifizierten Polybutadienen, umfassend die Schritte:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G),
d) Umsetzung des mindestens einen polyethermodifizierten Polybutadiens (G) mit mindestens einer Verbindung (I) zur mindestens einem polyether-polyester-modifizierten Polybutadien (H).

10. Verfahren nach Anspruch 9, weiterhin umfassend den Schritt:
e) Farbaufhellung des mindestens einen polyethermodifizierten Polybutadiens (G).

11. Verfahren nach mindestens einem der Ansprüche 9 - 10, **dadurch gekennzeichnet, dass** von den Doppelbindungen aller eingesetzten Polybutadiene (A) 0 % bis 80 % 1,2-Vinyl-Doppelbindungen und 20 % bis 100 % 1,4-Doppelbindungen, bevorzugt 0 % bis 30 % 1,2-Vinyl-Doppelbindungen und 70 % bis 100% 1,4-Doppelbindungen, besonders bevorzugt 0 % bis 10 % 1,2-Vinyl-Doppelbindungen und 90 % bis 100 % 1,4-Doppelbindungen, ganz besonders bevorzugt 0 % bis 5 % 1,2-Vinyl-Doppelbindungen und 95 % bis 100 % 1,4-Doppelbindungen sind.

12. Verfahren nach mindestens einem der Ansprüche 9 - 11, **dadurch gekennzeichnet, dass** die zahlenmittlere Molmasse Mₙ des mindestens einen Polybutadiens (A), bestimmt nach der in der Beschreibung angegebenen Methode, von 200 g/mol bis 20000 g/mol, bevorzugt von 500 g/mol bis 10000 g/mol, besonders bevorzugt von 700 g/mol bis 5000 g/mol beträgt.

13. Verfahren nach mindestens einem der Ansprüche 9 - 12, **dadurch gekennzeichnet, dass** >0 % bis 70 %, bevorzugt 1 % bis 50 %, weiter bevorzugt 2 % bis 40 %, noch weiter bevorzugt 3% bis 30 % und besonders bevorzugt 4 % bis 20 % der Doppelbindungen des mindestens einen Polybutadiens (A) epoxidiert werden.

14. Verfahren nach mindestens einem der Ansprüche 9 - 13, **dadurch gekennzeichnet, dass** das mindestens eine Epoxidierungsreagenz (B) Perameisensäure enthält, welche vorzugweise *in situ* aus Ameisensäure und Wasserstoffperoxid gebildet wird.

15. Verfahren nach mindestens einem der Ansprüche 9 - 14, **dadurch gekennzeichnet, dass** die mindestens eine hydroxyfunktionelle Verbindungen (D) ausgewählt ist aus der Gruppe der monofunktionellen Alkohole mit 1 bis 6 Kohlenstoffatomen, bevorzugt aus der Gruppe der monofunktionellen Alkohole mit 2 bis 4 Kohlenstoffatomen, besonders bevorzugt aus der Gruppe bestehend aus Ethanol, 1-Propanol, Isopropanol, 1-Butanol, 2-Butanol und Isobutanol.

16. Verfahren nach mindestens einem der Ansprüche 9 - 15, **dadurch gekennzeichnet, dass** im Schritt b) die Gesamtzahl der Hydroxygruppen aller hydroxyfunktionellen Verbindungen (D) zur Gesamtzahl der Epoxidgruppen aller epoxyfunktionellen Polybutadiene (C) von >1:1 bis 50:1, bevorzugt von 2:1 bis 35:1, weiter bevorzugt 3:1 bis 30:1, besonders bevorzugt von 3:1 bis 25:1 beträgt.

17. Verfahren nach mindestens einem der Ansprüche 9 - 16, **dadurch gekennzeichnet, dass** im Schritt b) eine Säure, bevorzugt Schwefelsäure, Sulfonsäuren und/oder Trifluoressigsäure, besonders bevorzugt Trifluormethansulfonsäure als Katalysator eingesetzt wird.

18. Verfahren nach mindestens einem der Ansprüche 9 - 17, **dadurch gekennzeichnet, dass** die mindestens eine im Schritt c) eingesetzte epoxyfunktionelle Verbindung ausgewählt ist
a. aus der Gruppe der Alkylenoxide mit 2 bis 18 Kohlenstoffatomen,
bevorzugt aus der Gruppe der Alkylenoxide mit 2 bis 8 Kohlenstoffatomen,
besonders bevorzugt ausgewählt aus der Gruppe bestehend aus Ethylenoxid, Propylenoxid, 1-Butylenoxid, cis-2-Butylenoxid, trans-2-Butylenoxid, Isobutylenoxid und Styroloxid,
und/oder
b. aus der Gruppe der Glycidylverbindungen,
bevorzugt aus der Gruppe der monofunktionellen Glycidylverbindungen,
besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, C₁₂/C₁₄-Fettalkoholglycidylether und C₁₃/C₁₅-Fettalkoholglycidylether.

19. Verfahren nach mindestens einem der Ansprüche 9 - 18, **dadurch gekennzeichnet, dass** im Schritt c) ein Alkoxylierungskatalysator eingesetzt wird; bevorzugt ausgewählt aus der Gruppe bestehend aus Alkalihydroxiden, Alkalialkoholaten, Aminen, Guanidinen, Amidinen, Phosphinen, SnCl₄, SnCl₂, SnF₂, BF₃, BF₃-Komplexen und Doppelmetallcyanid (DMC)-Katalysatoren; besonders bevorzugt ausgewählt aus der Gruppe bestehend aus Zn/Co-Doppelmetallcyanid-Katalysatoren, Aminen, Guanidinen, Amidinen, Alkalihydroxiden und Alkalialkoholaten.

20. Verfahren nach mindestens einem der Ansprüche 9 - 19, **dadurch gekennzeichnet, dass** die mindestens eine im Schritt d) eingesetzte Verbindung (I) ausgewählt ist aus der Gruppe bestehend aus cyclischen Anhydriden, Lactonen, Di-Lactiden oder cyclischen Carbonaten als Monomere oder Comonomere

21. Verfahren nach mindestens einem der Ansprüche 9 - 20, **dadurch gekennzeichnet, dass** im Schritt d) ein Initiatorkatalysator eingesetzt wird, bevorzugt ausgewählt aus der Gruppe bestehend aus Zirkoniumbutoxid, Tetraisopropyltitanat, Tetrabutyltitanat oder Titan(IV)-2-ethylhexyloxid, Zinkacetat, Kaliumacetat, Lithiumacetat, Natriumacetat, Calciumacetat, Bariumacetat, Magnesiumacetat, Kupferacetat oder Cobaltacetat, Zink-/ Bismutcarboxylat, Toluolsulfonsäure oder Trifluoressigsäure; besonders bevorzugt Zirkoniumbutoxid und Titanbutoxid.

22. Zusammensetzung enthaltend eine Verbindung nach einem der Ansprüche 1 - 8.

23. Verwendung der Zusammensetzung nach Anspruch 22 zur Herstellung von Beschichtungsstoffen, Farben und Lacke, als Druckfarbe oder Inkjettinte oder aber Dichtstoffen und Klebmassen.

24. Verwendung der Verbindung nach einem der Ansprüche 1 - 8 als Haftvermittler, Entschäumer, Dispergieradditiv, Benetzungsmittel oder Gleitadditive.

## Claims

1. Compounds based on polyether-modified polybutadiene, wherein the polyether-modified polybutadiene comprises repeat units selected from the group consisting of the divalent radicals 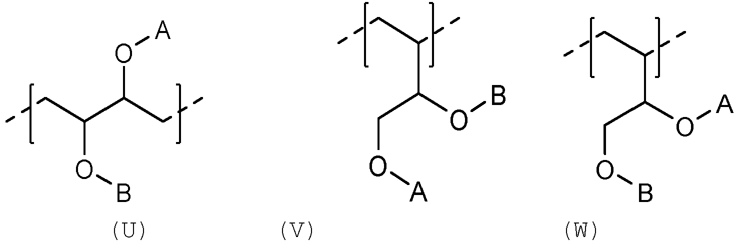 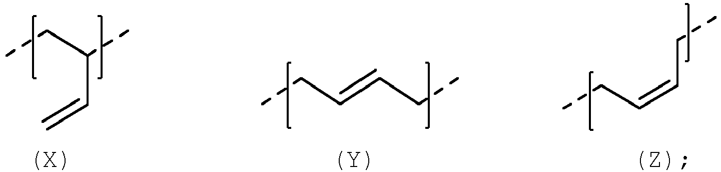 where
A is in each case independently a monovalent organic radical or a hydrogen radical,
preferably in each case independently selected from the group consisting of monovalent hydrocarbon radicals having 1 to 6 carbon atoms,
more preferably in each case independently selected from the group consisting of alkyl radicals having 1 to 4 carbon atoms;
B is in each case independently selected from the group consisting of radicals of the formula (4a) 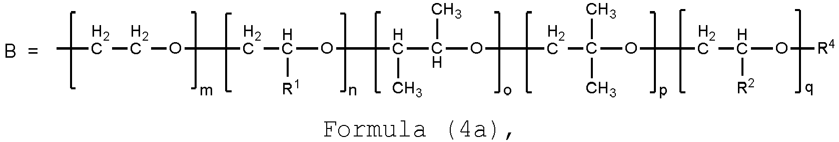 preferably in each case independently selected from the group consisting of radicals of the formula (4b) 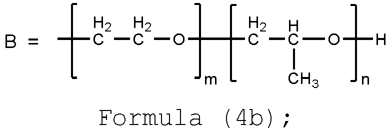
R¹ is in each case independently selected from the group consisting of monovalent hydrocarbon radicals having 1 to 16 carbon atoms,
preferably in each case independently an alkyl radical having 1 to 16 carbon atoms or a phenyl radical,
more preferably in each case independently a methyl radical, an ethyl radical or a phenyl radical;
R² is a radical of the formula -CH₂-O-R³;
R³ is in each case independently selected from the group consisting of monovalent hydrocarbon radicals having 3 to 18 carbon atoms;
preferably in each case independently an allyl radical, a butyl radical, an alkyl radical having 8 to 15 carbon atoms or a phenyl radical that may be substituted by monovalent radicals selected from hydrocarbon radicals having 1 to 4 carbon atoms;
more preferably a tert-butylphenyl radical or an o-cresyl radical;
R⁴ is hydrogen;
and
m, n, o, p and q are each independently 0 to 300, preferably 0 to 200, more preferably 0 to 100, with the proviso that the sum total of m, n, o, p and q is greater than 1, preferably greater than 5, more preferably greater than 10;
including every permutation of the repeat units (U), (V), (W), (X), (Y) and (Z) and of the repeat units in the B radical, with the proviso that the sum total of all repeat units (U), (V) and (W) divided by the sum total of all repeat units (U), (V), (W), (X), (Y) and (Z) is >0%, **characterized in that**
the radical B has at least one ester group.

2. Compound according to Claim 1, **characterized in that** the ester group is formed by reacting the radicals B with compounds (I) selected from the group consisting of cyclic anhydrides, lactones, dilactides or cyclic carbonates as monomers or comonomers, wherein the compound has repeat units selected from the group consisting of the radicals

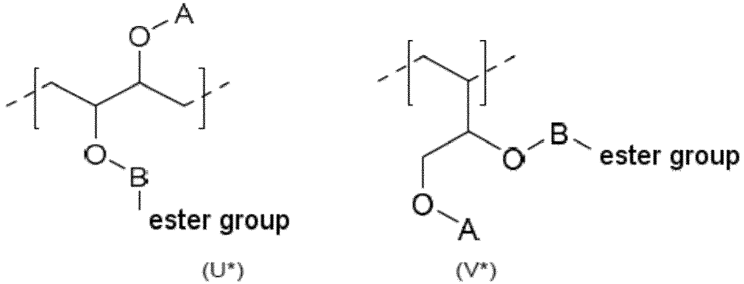

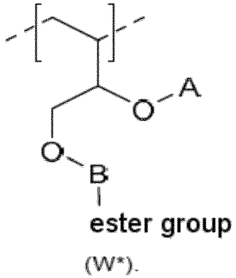

3. Compound according to either of the preceding claims, **characterized in that** cyclic anhydrides, in pure form or in any desired mixtures, are selected from the group consisting of saturated, unsaturated or aromatic cyclic dicarboxylic anhydrides, preferably succinic anhydride, oct(en)yl-, dec(en)yl- and dodec(en)ylsuccinic anhydride, maleic anhydride, itaconic anhydride, glutaric anhydride, adipic anhydride, citraconic anhydride, trimellitic anhydride, phthalic anhydride, hexahydro-, tetrahydro-, dihydro-, methylhexahydro- and methyltetrahydrophthalic anhydride.

4. Compound according to any of the preceding claims, **characterized in that** lactones, in pure form or in any desired mixtures, are selected from the group consisting of valerolactones, caprolactones and butyrolactones, which may be unsubstituted or substituted by organic radicals, preferably methyl groups, preferably ε-caprolactone or δ-valerolactone.

5. Compound according to any of the preceding claims, **characterized in that** the sum total of all repeat units (U), (V) and (W) divided by the sum total of all repeat units (U), (V), (W), (X), (Y) and (Z) is from >0% to 70%, preferably 1% to 50%, more preferably from 2% to 40%, even more preferably from 3% to 30%, especially preferably from 4% to 20%.

6. Compound according to any of the preceding claims, **characterized in that** the number-average molar mass Mₙ of the polybutadiene moiety, determined by the method specified in the description, is from 200 g/mol to 20 000 g/mol, preferably from 500 g/mol to 10 000 g/mol, more preferably from 700 g/mol to 5000 g/mol.

7. Compound according to any of the preceding claims, **characterized in that** 0% to 80%, preferably 0% to 30%, particularly preferably 0% to 10%, especially preferably 0% to 5% of the double bonds present are 1,2-vinyl double bonds, and 20% to 100%, preferably 70% to 100%, particularly preferably 90% to 100%, especially preferably 95% to 100% of the double bonds present are 1,4 double bonds.

8. Compound according to any of the preceding claims, **characterized in that** the average molar mass of the radical B, determined by the method specified in the description, is from 100 g/mol to 20 000 g/mol, preferably from 200 g/mol to 15 000 g/mol, particularly preferably from 400 g/mol to 10 000 g/mol.

9. Process for preparing one or more polyether-modified polybutadienes, comprising the steps of:
a) reacting at least one polybutadiene (A) with at least one epoxidizing reagent (B) to give at least one epoxy-functional polybutadiene (C);
b) reacting the at least one epoxy-functional polybutadiene (C) with at least one hydroxy-functional compound (D) to give at least one hydroxy-functional polybutadiene (E);
c) reacting the at least one hydroxy-functional polybutadiene (E) with at least one epoxy-functional compound (F) to give at least one polyether-modified polybutadiene (G),
d) reacting the at least one polyether-modified polybutadiene (G) with at least one compound (I) to give at least one polyether-polyester-modified polybutadiene (H).

10. Process according to Claim 9, further comprising the step of:
e) colour lightening of the at least one polyether-modified polybutadiene (G).

11. Process according to at least one of Claims 9 - 10, **characterized in that**, of the double bonds of all the polybutadienes (A) used, 0% to 80% are 1,2 vinyl double bonds and 20% to 100% are 1,4 double bonds, preferably 0% to 30% are 1,2 vinyl double bonds and 70% to 100% are 1,4 double bonds, particularly preferably 0% to 10% are 1,2 vinyl double bonds and 90% to 100% are 1,4 double bonds, especially preferably 0% to 5% are 1,2 vinyl double bonds and 95% to 100% are 1,4 double bonds.

12. Process according to at least one of Claims 9 - 11, **characterized in that** the number-average molar mass Mₙ of the at least one polybutadiene (A), determined by the method specified in the description, is from 200 g/mol to 20 000 g/mol, preferably from 500 g/mol to 10 000 g/mol, particularly preferably from 700 g/mol to 5000 g/mol.

13. Process according to at least one of Claims 9 - 12, **characterized in that** >0% to 70%, preferably 1% to 50%, more preferably 2% to 40%, even more preferably 3% to 30% and especially preferably 4% to 20% of the double bonds of the at least one polybutadiene (A) are epoxidized.

14. Process according to at least one of Claims 9 - 13, **characterized in that** the at least one epoxidizing reagent (B) comprises performic acid, which is preferably formed *in situ* from formic acid and hydrogen peroxide.

15. Process according to at least one of Claims 9 - 14, **characterized in that** the at least one hydroxy-functional compound (D) is selected from the group of the monofunctional alcohols having 1 to 6 carbon atoms, preferably from the group of the monofunctional alcohols having 2 to 4 carbon atoms, particularly preferably from the group consisting of ethanol, 1-propanol, isopropanol, 1-butanol, 2-butanol and isobutanol.

16. Process according to at least one of Claims 9 - 15, **characterized in that**, in step b), the total number of hydroxyl groups in all the hydroxy-functional compounds (D) to the total number of epoxy groups in all the epoxy-functional polybutadienes (C) is from > 1:1 to 50:1, preferably from 2:1 to 35:1, further preferably 3:1 to 30:1, especially preferably from 3:1 to 25:1.

17. Process according to at least one of Claims 9 - 16, **characterized in that**, in step b), an acid, preferably sulfuric acid, sulfonic acids and/or trifluoroacetic acid, particularly preferably trifluoromethanesulfonic acid, is used as catalyst.

18. Process according to at least one of Claims 9 - 17, **characterized in that** the at least one epoxy-functional compound used in step c) is selected
a. from the group of the alkylene oxides having 2 to 18 carbon atoms,
preferably from the group of the alkylene oxides having 2 to 8 carbon atoms,
more preferably selected from the group consisting of ethylene oxide, propylene oxide, 1-butylene oxide, cis-2-butylene oxide, trans-2-butylene oxide, isobutylene oxide and styrene oxide,
and/or
b.from the group of the glycidyl compounds,
preferably from the group of the monofunctional glycidyl compounds,
more preferably from the group consisting of phenyl glycidyl ether, o-cresyl glycidyl ether, tert-butylphenyl glycidyl ether, allyl glycidyl ether, butyl glycidyl ether, 2-ethylhexyl glycidyl ether, C₁₂/C₁₄ fatty alcohol glycidyl ether and C₁₃/C₁₅ fatty alcohol glycidyl ether.

19. Process according to at least one of Claims 9 - 18, **characterized in that** an alkoxylation catalyst is used in step c), preferably selected from the group consisting of alkali metal hydroxides, alkali metal alkoxides, amines, guanidines, amidines, phosphines, SnCl₄, SnCl₂, SnF₂, BF₃, BF₃ complexes and double metal cyanide (DMC) catalysts, more preferably selected from the group consisting of Zn/Co double metal cyanide catalysts, amines, guanidines, amidines, alkali metal hydroxides and alkali metal alkoxides.

20. Process according to at least one of Claims 9 - 19, **characterized in that** the at least one compound (I) used in step d) is selected from the group consisting of cyclic anhydrides, lactones, dilactides or cyclic carbonates as monomers or comonomers.

21. Process according to at least one of Claims 9 - 20, **characterized in that** an initiator catalyst is used in step d), preferably selected from the group consisting of zirconium butoxide, tetraisopropyl titanate, tetrabutyl titanate or titanium(IV) 2-ethylhexyloxide, zinc acetate, potassium acetate, lithium acetate, sodium acetate, calcium acetate, barium acetate, magnesium acetate, copper acetate or cobalt acetate, zink/bismuth carboxylate, toluenesulfonic acid or trifluoroacetic acid, particularly preferably zirconium butoxide and titanium butoxide.

22. Composition comprising a compound according to any of Claims 1 - 8.

23. Use of the composition according to Claim 22 for producing coating materials, paints and lacquers, as printing ink or inkjet ink or else sealants and adhesives.

24. Use of the compound according to any of Claims 1 - 8 as adhesion promoter, defoamer, dispersing additive, wetting aid or glide additive.

## Revendications

1. Composés à base de polybutadiène modifié par un polyéther, le polybutadiène modifié par un polyéther comprenant des motifs répétitifs choisis dans le groupe consistant en les radicaux divalents 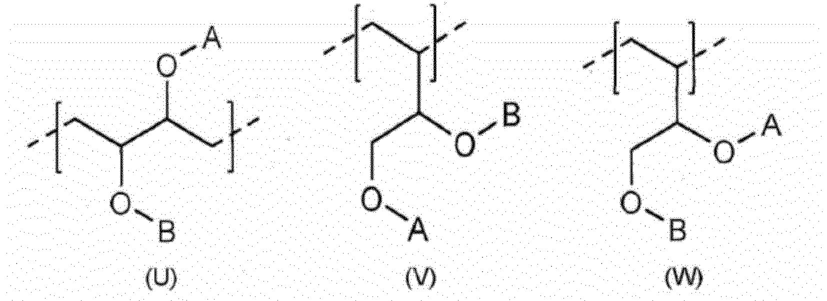 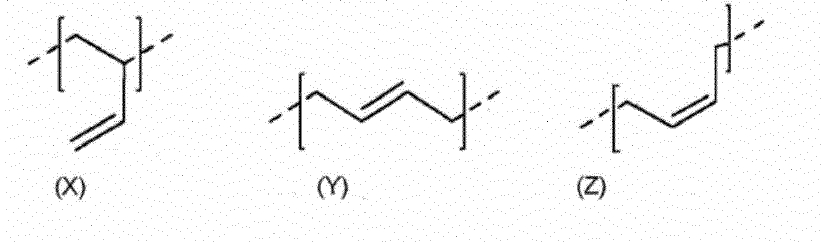 dans lesquels
A représente chacun indépendamment des autres un radical organique monovalent ou un radical hydrogène,
de préférence est chacun indépendamment des autres choisi dans le groupe consistant en les radicaux hydrocarbonés monovalents ayant 1 à 6 atomes de carbone,
d'une manière particulièrement préférée est chacun indépendamment des autres choisi dans le groupe consistant en les radicaux alkyle ayant 1 à 4 atomes de carbone ;
B est chacun indépendamment des autres choisi dans le groupe consistant en les radicaux de Formule (4a), 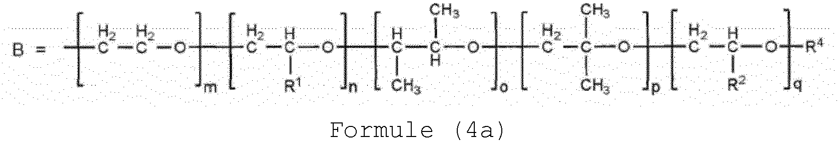 de préférence est chacun indépendamment des autres choisi dans le groupe consistant en les radicaux de Formule (4b) , 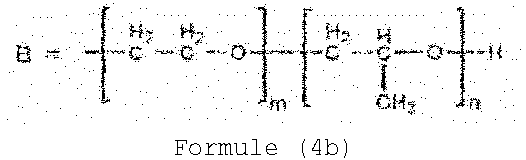
R¹ est chacun indépendamment des autres choisi dans le groupe consistant en les radicaux hydrocarbonés monovalents ayant 1 à 16 atomes de carbone,
de préférence représente chacun indépendamment des autres un radical alkyle ayant 1 à 16 atomes de carbone ou un radical phényle,
d'une manière particulièrement préférée représente chacun indépendamment des autres un radical méthyle, un radical éthyle ou un radical phényle ;
R² représente un radical de formule -CH₂-O-R³ ;
R³ est chacun indépendamment des autres choisi dans le groupe consistant en les radicaux hydrocarbonés monovalents ayant 3 à 18 atomes de carbone ;
de préférence représente chacun indépendamment des autres un radical allyle, un radical butyle, un radical alkyle ayant 8 à 15 atomes de carbone ou un radical phényle qui peut être substitué par des radicaux monovalents choisis parmi les radicaux hydrocarbonés ayant 1 à 4 atomes de carbone ;
d'une manière particulièrement préférée représente un radical tert-butylphényle ou un radical o-crésyle ;
R⁴ représente un hydrogène
et
m, n, o, p et q représentent chacun indépendamment des autres 0 à 300, de préférence 0 à 200, d'une manière particulièrement préférée 0 à 100, à la condition que la somme de m, n, o, p et q soit supérieure à 1, de préférence supérieure à 5, d'une manière particulièrement préférée supérieure à 10 ;
et chaque permutation des motifs répétitifs (U), (V), (W), (X), (Y) et (Z), ainsi que des motifs répétitifs du radical B, est aussi pris en compte, à la condition que la somme de tous les motifs répétitifs (U), (V) et (W) divisée par la somme de tous les motifs répétitifs (U), (V), (W), (X), (Y) et (Z) soit > 0 %, **caractérisés en ce que**
le radical B comprend au moins un groupe ester.

2. Composé selon la revendication 1, **caractérisé en ce que** le groupe ester est formé par réaction des radicaux B avec des composés (I) choisis dans le groupe consistant en les anhydrides cycliques, les lactones, les di-lactides ou les carbonates cycliques en tant que monomères ou comonomères, le composé comprenant des motifs répétitifs choisis dans le groupe consistant en les radicaux 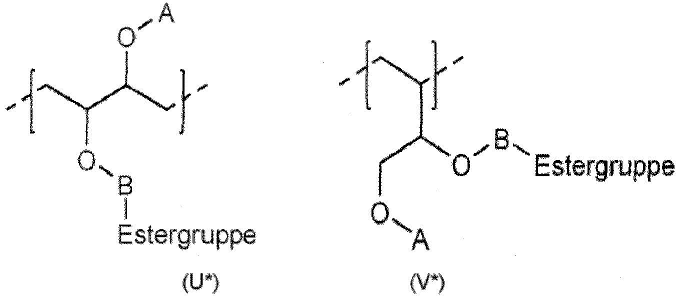 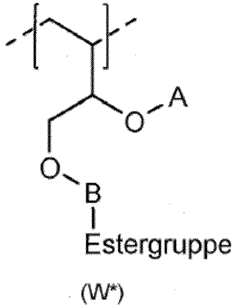 (Estergruppe = Groupe ester).

3. Composé selon l'une des revendications précédentes, **caractérisé en ce que** les anhydrides cycliques, purs ou selon des mélanges quelconques, sont choisis dans le groupe consistant en les anhydrides dicarboxyliques cycliques saturés, insaturés ou aromatiques, de préférence l'anhydride succinique, l'anhydride oct(én)yl-, déc(èn)yl- et dodéc(èn)yle succinique, l'anhydride maléique, l'anhydride itaconique, l'anhydride glutarique, l'anhydride adipique, l'anhydride citraconique, l'anhydride trimellitique, l'anhydride phtalique, l'anhydride hexahydro-, tétrahydro-, dihydro-, méthylhexahydro- et méthyltétrahydrophtalique.

4. Composé selon l'une des revendications précédentes, **caractérisé en ce que** les lactones, pures ou selon des mélanges quelconques, sont choisies dans le groupe consistant en les valérolactones, les caprolactones et les butyrolactones, qui peuvent être non substituées ou substituées par des groupes pourvus de radicaux organiques, de préférence méthyle, de préférence l'ε-caprolactone ou la δ-valérolactone.

5. Composé selon l'une des revendications précédentes, **caractérisé en ce que** la somme des motifs répétitifs (U), (V) et (W) divisée par la somme de tous les motifs répétitifs (U), (V), (W), (X), (Y) et (Z) est > 0 % à 70 %, de préférence de 1 % à 50 %, plus préférentiellement de 2 % à 40 %, d'une manière encore plus préférée de 3 % à 30 %, d'une manière particulièrement préférée de 4 % à 20 %.

6. Composé selon l'une des revendications précédentes, **caractérisé en ce que** la masse moléculaire moyenne en nombre Mₙ de la partie polybutadiène, déterminée par la méthode présentée dans la description, est de 200 g/mol à 20 000 g/mol, de préférence de 500 g/mol à 10 000 g/mol, d'une manière particulièrement préférée de 700 g/mol à 5 000 g/mol.

7. Composé selon l'une des revendications précédentes, **caractérisé en ce que** 0 % à 80 %, de préférence 0 % à 30 %, d'une manière particulièrement préférée 0 % à 10 %, d'une manière tout particulièrement préférée 0 % à 5 % des doubles liaisons présentes sont des doubles liaisons 1,2-vinyliques et 20 % à 100 %, de préférence 70 % à 100 %, d'une manière particulièrement préférée 90 % à 100 %, d'une manière tout particulièrement préférée 95 % à 100 % des doubles liaisons présentes sont des doubles liaisons en 1,4.

8. Composé selon l'une des revendications précédentes, **caractérisé en ce que** la masse moléculaire moyenne du radical B, déterminée par la méthode présentée dans la description, est de 100 g/mol à 20 000 g/mol, de préférence de 200 g/mol à 15 000 g/mol, d'une manière particulièrement préférée de 400 g/mol à 10 000 g/mol.

9. Procédé de fabrication d'un ou plusieurs polybutadiènes modifiés par un polyéther, comprenant les étapes suivantes :
a) réaction d'au moins un polybutadiène (A) avec au moins un réactif d'époxydation (B) pour obtenir au moins un polybutadiène à fonctionnalité époxy (C) ;
b) réaction de l'au moins un polybutadiène à fonctionnalité époxy (C) avec au moins un composé à fonctionnalité hydroxy (D), pour obtenir au moins un polybutadiène à fonctionnalité hydroxy (E) ;
c) réaction de l'au moins un polybutadiène à fonctionnalité hydroxy (E) avec au moins un composé à fonctionnalité époxy (F) pour obtenir au moins un polybutadiène modifié par un polyéther (G),
d) réaction de l'au moins un polybutadiène modifié par un polyéther (G) avec au moins un composé (I) pour obtenir au moins un polybutadiène modifié par un polyéther-polyester (H).

10. Procédé selon la revendication 9, comprenant en outre l'étape suivante :
e) éclaircissement de la couleur de l'au moins un polybutadiène modifié par un polyéther (G).

11. Procédé selon au moins l'une des revendications 9-10, **caractérisé en ce que**, parmi les doubles liaisons de tous les polybutadiènes utilisés (A), 0 % à 80 % sont des doubles liaisons 1,2-vinyliques et 20 % à 100 % sont des doubles liaisons en 1,4, de préférence 0 % à 30 % sont des doubles liaisons 1,2-vinyliques et 70 % à 100 % sont des doubles liaisons en 1,4, d'une manière particulièrement préférée 0 % à 10 % sont des doubles liaisons 1,2-vinyliques et 90 % à 100 % des doubles liaisons en 1,4, d'une manière tout particulièrement préférée 0 % à 5 % sont des doubles liaisons 1,2-vinyliques et 95 % à 100 % des doubles liaisons en 1,4.

12. Procédé selon au moins l'une des revendications 9 à 11, **caractérisé en ce que** la masse moléculaire moyenne en nombre Mₙ de l'au moins un polybutadiène (A), déterminée par la méthode présentée dans la description, est de 200 g/mol à 20 000 g/mol, de préférence de 500 g/mol à 10 000 g/mol, d'une manière particulièrement préférée de 700 g/mol à 5 000 g/mol.

13. Procédé selon au moins l'une des revendications 9 à 12, **caractérisé en ce que** > 0 % à 70 %, de préférence 1 % à 50 %, plus préférentiellement 2 % à 40 %, d'une manière encore plus préférée 3 % à 30 % et d'une manière particulièrement préférée 4 % à 20 % des doubles liaisons de l'au moins un polybutadiène (A) subissent une époxydation.

14. Procédé selon au moins l'une des revendications 9 à 13, **caractérisé en ce que** l'au moins un réactif d'époxydation (B) contient de l'acide performique, qui de préférence est formé *in situ* à partir d'acide formique et de peroxyde d'hydrogène.

15. Procédé selon au moins l'une des revendications 9 à 14, **caractérisé en ce que** l'au moins un composé à fonctionnalité hydroxy (D) est choisi dans le groupe des alcools monofonctionnels ayant 1 à 6 atomes de carbone, de préférence dans le groupe des alcools monofonctionnels ayant 2 à 4 atomes de carbone, d'une manière particulièrement préférée dans le groupe consistant en l'éthanol, le 1-propanol, l'isopropanol, le 1-butanol, le 2-butanol et l'isobutanol.

16. Procédé selon au moins l'une des revendications 9 à 15, **caractérisé en ce que** dans l'étape b) le nombre total des groupes hydroxy de tous les composés à fonctionnalité hydroxy (D), rapporté au nombre total des groupes époxy de tous les butadiènes à fonctionnalité époxy (C), est de > 1:1 à 50:1, de préférence de 2:1 à 35:1, plus préférentiellement de 3:1 à 30:1, d'une manière particulièrement préférée de 3:1 à 25:1.

17. Procédé selon au moins l'une des revendications 9 à 16, **caractérisé en ce que** dans l'étape b), on utilise en tant que catalyseur un acide, de préférence l'acide sulfurique, les acides sulfoniques et/ou l'acide trifluoracétique, d'une manière particulièrement préférée l'acide trifluorométhanesulfonique.

18. Procédé selon au moins l'une des revendications 9 à 17, **caractérisé en ce que** l'au moins un composé à fonctionnalité époxy utilisé dans l'étape c) est choisi
a. dans le groupe des oxydes d'alkylène ayant 2 à 18 atomes de carbone, de préférence dans le groupe des oxydes d'alkylène ayant 2 à 8 atomes de carbone, et est choisi d'une manière particulièrement préférée dans le groupe consistant en l'oxyde d'éthylène, l'oxyde de propylène, l'oxyde de 1-butylène, l'oxyde de *cis*-2-butylène, l'oxyde de trans-2-butylène, l'oxyde d'isobutylène et l'oxyde de styrène, et/ou
b. dans le groupe des composés glycidyliques,
de préférence dans le groupe des composés glycidyliques monofonctionnels, d'une manière particulièrement préférée dans le groupe consistant en le phénylglycidyléther, l'o-crésylglycidyléther, le tert-butylphénylglycidyléther, l'allylglycidyléther, le butylglycidyléther, le 2-éthylhexylglycidyléther, les éthers glycidyliques d'acides gras en C₁₂/C₁₄ et les éthers glycidyliques des alcools gras en C₁₃/C₁₅.

19. Procédé selon au moins l'une des revendications 9 à 18, **caractérisé en ce que** dans l'étape c), on utilise un catalyseur d'alcoxylation, de préférence choisi dans le groupe consistant en les hydroxydes de métaux alcalins, les alcoolates de métaux alcalins, les amines, les guanidines, les amidines, les phosphines, SnCl₄, SnCl₂, SnF₂, BF₃, les complexes de BF₃ et les catalyseurs à base d'un cyanure métallique double (DMC) ; de préférence choisi dans le groupe consistant en les catalyseurs au cyanure métallique double au Zn/Co, les amines, les guanidines, les amidines, les hydroxydes de métaux alcalins et les alcoolates de métaux alcalins.

20. Procédé selon au moins l'une des revendications 9 à 19, **caractérisé en ce que** l'au moins un composé (I) utilisé dans l'étape d) est choisi dans le groupe consistant en les anhydrides cycliques, les lactones, les di-lactides ou les carbonates cycliques en tant que monomères ou comonomères.

21. Procédé selon au moins l'une des revendications 9 à 20, **caractérisé en ce que** dans l'étape d), on utilise un catalyseur amorceur, de préférence choisi dans le groupe consistant en le butoxyde de zirconium, le titanate de tétraisopropyle, le titanate de tétrabutyle ou le tétrakis(2-éthylhexanolate) de titane, l'acétate de zinc, l'acétate de potassium, l'acétate de lithium, l'acétate de sodium, l'acétate de calcium, l'acétate de baryum, l'acétate de magnésium, l'acétate de cuivre ou l'acétate de cobalt, le carboxylate de zinc/bismuth, l'acide toluènesulfonique ou l'acide trifluoracétique ; d'une manière particulièrement préférée le butoxyde de zirconium et le butoxyde de titane.

22. Composition contenant un composé selon l'une des revendications 1 à 8.

23. Utilisation de la composition selon la revendication 22 pour la fabrication de matériaux de revêtement, de peintures et de vernis, comme encre d'impression ou encre pour jet d'encre, ou encore comme matériaux d'étanchéité et masses adhésives.

24. Utilisation du composé selon l'une des revendications 1 à 8 en tant que promoteur d'adhérence, antimoussant, additif dispersant, agent mouillant ou additifs lubrifiant.
